# EUROPEAN PATENT APPLICATION

(11) **EP 4 835 664 A1**
(43) Date of publication of application: **04.11.2026**
(21) Application number: 24910159.3
(22) Date of filing: 15.10.2024
(51) Int. Cl.: G06F 9/50

(54) **COMPUTING RESOURCE PROCESSING METHOD, DEVICE, AND STORAGE MEDIUM**

(30) Priority: 26.12.2023 CN 202311817214
(71) Applicant: Cloud Intelligence Assets Holding (Singapore) Private Limited, Singapore 189554 (SG)
(72) Inventor: GONG, Xiaodong, Hangzhou, Zhejiang 310023 (CN)
(74) Representative: Barker Brettell LLP
(86) International application number: PCT/CN2024/125026
(87) International publication number: WO 2025/139217

(57) **Abstract**

Embodiments of the present disclosure provide a computing resource processing method, a device, and a storage medium. In the embodiments of the present disclosure, resource scheduling for a physical computing resource object is combined with sleep control for the physical computing resource object. By way of maintaining sleep state transition prediction information respectively corresponding to a plurality of physical computing resource objects, and performing scheduling on the physical computing resource object based on the maintained sleep state transition prediction information, a task can be scheduled to a physical computing resource object that is shallow or busy in a sleep state as much as possible. This helps to enable a part of physical computing resource objects to be in a deep sleep state as long as possible and enable a part of the physical computing resource objects to be in a busy state as much as possible, to reduce a frequency of entering or exiting from a sleep state by the physical computing resource object.

## Description

This application claims priority to Chinese Patent Application No. 202311817214.3, filed with the China National Intellectual Property Administration on December 26, 2023 and entitled "COMPUTING RESOURCE PROCESSING METHOD, DEVICE, AND STORAGE MEDIUM", which is incorporated herein by reference in its entirety.

### TECHNICAL FIELD

The present disclosure relates to the field of cloud computing technologies, and in particular, to a computing resource processing method, a device, and a storage medium.

### BACKGROUND

With the development of cloud computing technologies, more and more users choose to use cloud servers as infrastructures thereof. A cloud server usually uses a multi-core processor (Central Processing Unit, CPU), for example, a 4-core processor or an 8-core processor, to provide high computing performance for a user.

To reduce device power consumption while achieving higher computing performance, an advanced configuration and power management interface (Advanced Configuration and Power Management Interface, ACPI) specification defines a sleep state of a CPU. Entering the sleep state when the CPU is idle can save power consumption, and help the other CPU to work at a high frequency.

However, the conventional technology faces a problem that a CPU frequently enters and exits from a sleep state. Excessive power consumption is consumed due to the sleep state being entered and exited from. If the sleep state is entered and exited from frequently, power consumption cannot be saved, and the other CPU cannot obtain a higher frequency.

### SUMMARY

Various aspects of the present disclosure provide a computing resource processing method, a device, and a storage medium, to reduce a frequency with which a physical computing resource object enters and exits from a sleep state.

An embodiment of the present disclosure provides a physical machine. An operating system runs on a hardware resource of the physical machine, the hardware resource includes a plurality of physical computing resource objects, the plurality of physical computing resource objects supports a plurality of sleep states having different sleep depths, and the operating system includes: a target resource scheduler and a target sleep controller. The target sleep controller is configured to maintain sleep state transition prediction information respectively corresponding to the plurality of physical computing resource objects, where the sleep state transition prediction information includes probability information of entering each sleep state during the subsequent sleep when a corresponding physical computing resource object is woken up from any sleep state. The target resource scheduler is configured to: select a target physical computing resource object based on the sleep state transition prediction information respectively corresponding to the plurality of physical computing resource objects, and schedule a to-be-scheduled target task to the target physical computing resource object.

An embodiment of the present disclosure further provides a computing resource processing method, including: maintaining sleep state transition prediction information respectively corresponding to a plurality of physical computing resource objects, where the sleep state transition prediction information includes probability information of entering each of a plurality of sleep states during the subsequent sleep when a corresponding physical computing resource object is woken up from any of the plurality of sleep states; selecting a target physical computing resource object based on the sleep state transition prediction information respectively corresponding to the plurality of physical computing resource objects; and scheduling a to-be-scheduled target task to the target physical computing resource object.

An embodiment of the present disclosure further provides a multi-core processor system, including a plurality of processor cores and a memory. The memory is configured to store a program code of an operating system, and the plurality of processor cores are configured to run the program code of the operating system, to implement steps in the computing resource processing method.

An embodiment of the present disclosure further provides a computer-readable storage medium storing a computer program which, when executed by a processor, enables the processor to implement steps in the computing resource processing method.

An embodiment of the present disclosure further provides a computer program product, where the computer program product includes a computer program which, when executed by a processor, implements steps in the computing resource processing method.

In the embodiments, resource scheduling for a physical computing resource object is combined with sleep control for the physical computing resource object. By way of maintaining sleep state transition prediction information respectively corresponding to a plurality of physical computing resource objects, and performing scheduling on the physical computing resource object based on the maintained sleep state transition prediction information, a task can be scheduled to a physical computing resource object that is shallow or busy in a sleep state as much as possible. This helps to enable a part of physical computing resource objects to be in a deep sleep state as long as possible and enable a part of the physical computing resource objects to be in a busy state as much as possible, to reduce a frequency of entering or exiting from a sleep state by the physical computing resource object. Further, it reduces frequency of predicting a sleep state, and reduces a problem caused by a prediction error.

### BRIEF DESCRIPTION OF DRAWINGS

The drawings described herein are intended for a further understanding of the present disclosure and constitute a part of the present disclosure. Example embodiments of the present disclosure and descriptions thereof are intended to explain the present disclosure, and do not constitute any inappropriate limitation on the present disclosure.
FIG. 1a is a schematic diagram of a sleep state transition according to an example embodiment of the present disclosure.
FIG. 1b is a schematic diagram of sleep power consumption according to an example embodiment of the present disclosure.
FIG. 2 is a diagram of a software-hardware architecture of a physical machine according to another example embodiment of the present disclosure.
FIG. 3 is a schematic flowchart of controlling a physical computing resource object to enter a third sleep state according to still another example embodiment of the present disclosure.
FIG. 4 is a schematic diagram of control logic of a menu sleep controller according to still another example embodiment of the present disclosure.
FIG. 5 is a schematic flowchart of a computing resource processing method according to still another example embodiment of the present disclosure.
FIG. 6a is a schematic diagram of deployment implementation of a computing resource processing method in an actual application scenario according to still another example embodiment of the present disclosure.
FIG. 6b is a schematic flowchart of updating a data structure according to still another example embodiment of the present disclosure.
FIG. 6c is a schematic flowchart of sleep state selection according to still another example embodiment of the present disclosure.
FIG. 6d is a schematic flowchart of performing scheduling by a target resource scheduler according to still another example embodiment of the present disclosure.
FIG. 7 is a schematic diagram of a computing resource processing apparatus according to still another example embodiment of the present disclosure.
FIG. 8 is a schematic diagram of an electronic device according to still another example embodiment of the present disclosure.

### DESCRIPTION OF EMBODIMENTS

To make the objectives, technical solutions, and advantages of the present disclosure clearer, the following clearly and completely describes the technical solutions in the present disclosure with reference to specific embodiments and drawings in the present disclosure. Apparently, the described embodiments are only some embodiments rather than all the embodiments of the present disclosure. All other embodiments obtained by a person of ordinary skill in the art based on embodiments of the present disclosure without creative efforts shall fall within the protection scope of the present disclosure.

It should be noted that, user information (including but not limited to user equipment information, user personal information, and the like) and data (including but not limited to data for analysis, stored data, displayed data, and the like) in the present disclosure are information and data that are authorized by a user or that are sufficiently authorized by all parties, and related data needs to be collected, used, and processed by complying with related laws and regulations and standards of related countries and regions, and a corresponding operation entry is provided for a user to select to authorize or reject. In addition, various models (including but not limited to a language model or a large model) in the present disclosure satisfy related laws and standards.

A multi-core processor scenario is used as an example. A power supply state that each CPU core in a multi-core processor may be in may be defined in the ACPI specification, for example, a power supply state C0, a power supply state C1, a power supply state C2, ..., and a power supply state Cn. Where the power supply state C0 is a valid power state in which a CPU core executes instructions, the power supply state C1 to the power supply state Cn are sleep states of CPU cores, and the sleep state is a low-load power supply state. In multi-core processor scenario, when a CPU core does not need to execute a task, the CPU core may be controlled, through an API (Application Programming Interface, application programming interface) provided by CPU firmware, to be in any sleep state. Compared with that the CPU core is in the C0 state, it can reduce overall power consumption of a multi-core processor, in other words, consume less power and radiate less heat. From the sleep state C1 to the sleep state Cn, when sleep time remains the same, power consumption saved in each sleep state sequentially increases.

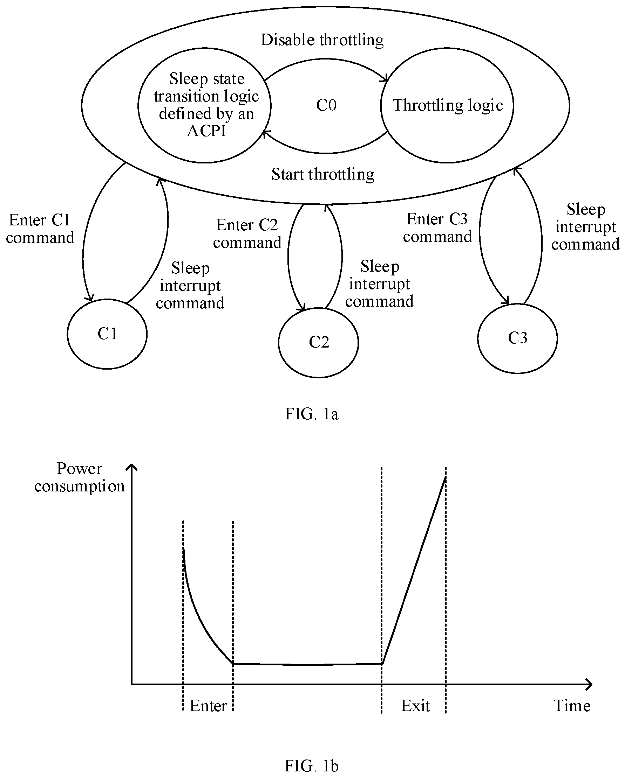

As shown in a schematic diagram of a sleep state transition in FIG. 1a, when the CPU core is in the power supply state C0, the ACPI may change overall performance of the multi-core processor by using defined throttling logic and sleep state transition logic defined by the ACPI. For example, the multi-core processor may start the throttling logic, to send an "Enter C1" command by using the sleep state transition logic, so that the CPU core enters the sleep state C1 from the power supply state C0. When receiving a sleep interrupt instruction, the CPU core may exit from the sleep state C1 to return to the power supply state C0. In addition, a manner of entering/exiting from the sleep state C2 and C3 is the same as the manner of entering/exiting from the sleep state C1, and details are not described herein again.

It should be noted that, from the sleep state C1 to the sleep state Cn, power consumption saved in each sleep state sequentially increases, and it may also be understood as that from the sleep state C1 to the sleep state Cn is a process in which the sleep state goes from shallow to deep. When some CPU cores enter a deeper sleep state, other CPU cores may obtain a higher operating frequency. As shown in Table 1, a specific multi-core processor is used as an example herein. The processor has 48 CPU cores in total. It is assumed that a sleep state C6 is the deepest sleep state supported by the multi-core processor. Table 1 below provides a correspondence between the number of CPU cores not in the sleep state C6 and operating frequencies that can be obtained by other CPU cores. It can be learned from Table 1 that the fewer CPU cores that are not in the sleep state C6, the more CPU cores are in the sleep state C6 and a higher operating frequency that can be obtained by the other cores.

**Table 1**

| The number of CPU cores not in the sleep state C6 | Frequency (Ghz) |
|---|---|
| 1 to 24 | 3.8 |
| 25 to 30 | 3.7 |
| 31 to 34 | 3.6 |
| 35 to 38 | 3.5 |
| 39 to 42 | 3.3 |
| 43 to 44 | 3.3 |
| 45 to 46 | 3.2 |
| 47 to 48 | 3.2 |

It can be known from the foregoing descriptions that a CPU core may save power consumption when entering a sleep state in an idle state, and may be woken up and exit from the sleep state when being scheduled again. As shown in FIG. 1b, when a CPU core enters or exits from a specific sleep state, power consumption is consumed and time is needed. Time required for exiting from the sleep state may be referred to as exit latency time. In addition, as a depth of the sleep state increases, power consumption and time consumed for entering or exiting from the sleep state gradually increase. As can be seen, if an appropriate sleep state cannot be selected for a CPU core, the CPU core frequently enters and exits from a sleep state, and additional power consumption is consumed for entering and exiting from the sleep state. Consequently, other CPU cores cannot obtain a higher frequency. This not only does not bring power consumption saving, but also causes a waste of power consumption resources and a response latency. For example, in some cases, if actual sleep time of a CPU core is shorter than expected sleep time, and a deeper sleep state is incorrectly selected for the CPU core based on the expected sleep time, since actual sleep time of the CPU core in the sleep state is short, power consumption saved by sleeping is less than power consumption consumed by entering and exiting from the sleep state. This not only wastes CPU power consumption but also has a long response latency. For another example, in some other cases, actual sleep time of a CPU core is longer than expected sleep time. When a shallow sleep state is incorrectly selected for the CPU core based on the expected sleep time, the CPU core wakes up from the sleep state prematurely, which wastes CPU power consumption. In addition, since the CPU core fails to enter a deeper sleep state, other cores cannot obtain a high frequency.

In embodiments of the present disclosure, a concept of a sleep state is introduced to various physical computing resource objects based on related content of the foregoing multi-core processor. The physical computing resource object may include a CPU, a DPU (Data Processing Unit, data processing unit), a TPU (Tensor Processing Unit, tensor processing unit), and other various physical computing resource objects similar to the CPU. When the sleep state is introduced to various physical computing resource objects, in a scenario in which a plurality of physical computing resource objects collaborate with each other, technical problems such as a waste of power consumption and a response latency caused by frequently entering and exiting from a sleep state and failure of the other CPUs to obtain a higher operating frequency are also faced.

For the foregoing problem, in embodiments of the present disclosure, it is proposed to combine resource scheduling for a physical computing resource object with sleep control for the physical computing resource object. By way of maintaining sleep state transition prediction information respectively corresponding to a plurality of physical computing resource objects, and performing scheduling on the physical computing resource object based on the maintained sleep state transition prediction information, a task can be scheduled to a physical computing resource object that is shallow or busy in a sleep state as much as possible. This helps to enable a part of physical computing resource objects to be in a deep sleep state as long as possible, and enable a part of the physical computing resource objects to be in a busy state as much as possible, to reduce a frequency of entering or exiting from a sleep state by the physical computing resource object, fully take advantage of the sleep state, save power consumption, and enable the other physical computing resource object not in a deep sleep state to obtain a higher operating frequency as much as possible. In addition, since the frequency at which the physical computing resource object enters and exits from the sleep state is reduced, it means that predicted frequency of the sleep state is reduced. This helps to reduce a problem caused by a prediction error, and resolve the foregoing technical problem.

The following describes technical solutions provided in embodiments of the present disclosure in detail with reference to the drawings.

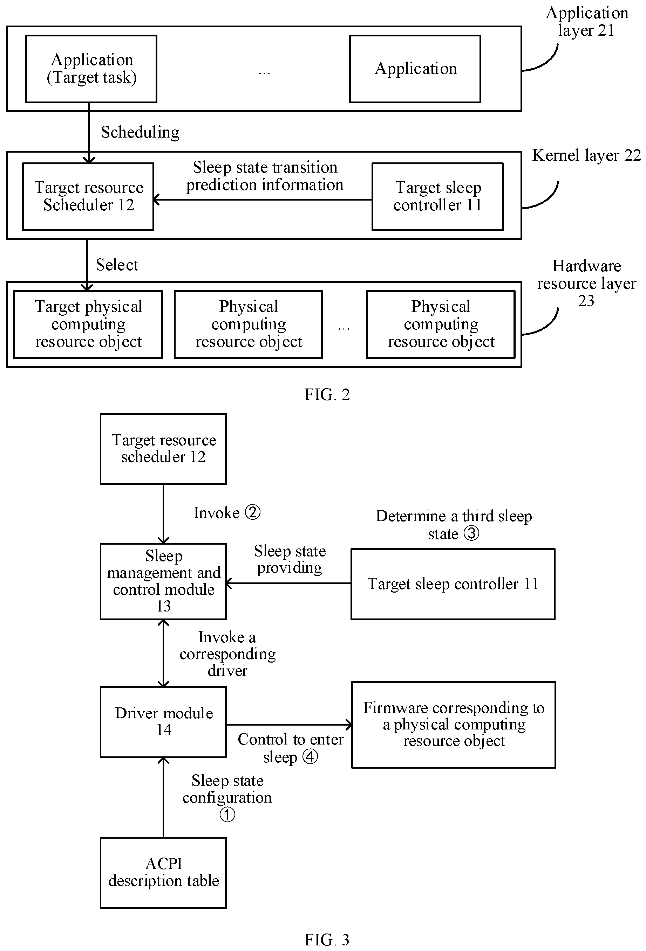

FIG. 2 is a diagram of a software-hardware architecture of a physical machine according to an example embodiment of the present disclosure. As shown in FIG. 2, the physical machine includes an application layer 21, a kernel layer (that is, an operating system) 22, and a hardware resource layer 23.

The hardware resource layer 23 includes various hardware resources of the physical machine. The hardware resources of the physical machine include a plurality of physical computing resource objects, where the plurality of physical computing resource objects collaborate with each other, and the plurality of physical computing resource objects may be integrated on one chip but is not limited thereto. Taking the physical computing resource object being a CPU as an example, the plurality of physical computing resource objects may be implemented as a multi-core CPU. In addition, the hardware resources of the physical machine further include a memory, a communication component, a display, a power supply component, an audio component, and various external devices, which are not shown in FIG. 2. In addition, only the physical computing resource object is illustrated in FIG. 2, and the number of the physical computing resource objects is not limited.

In this embodiment, the plurality of physical computing resource objects supports a plurality of sleep states having different sleep depths. The number of sleep states supported by a physical computing resource object varies based on different types and manufacturers of physical computing resource objects. In addition, power consumption and time consumed for entering and exiting from each sleep state are different. For example, a sleep state C1, a sleep state C2, and a sleep state C3 may be supported for physical computing resource objects provided by some manufacturers, and a sleep state C1, a sleep state C2, a sleep state C3, a sleep state C4, a sleep state C5, and a sleep state C6 may be supported for physical computing resource objects provided by other manufacturers, which is not limited. Regardless of a physical computing resource object of a specific type and a physical computing resource object provided by a specific manufacturer, for a plurality of sleep states supported by a physical computing resource object, sleep depths of different sleep states may be different. Optionally, for ease of description, a numeral after C may be used to represent a sleep depth of a sleep state. As the numeral after C increases, sleep depths of the sleep states sequentially increase. Correspondingly, power consumption and time consumed for entering and exiting from the sleep states sequentially increase.

In this embodiment, an operating system, that is, the kernel layer 22, runs on the hardware resource of the physical machine. Above the operating system, there is the application layer 21. The application layer 21 includes various applications running on the physical machine. Based on different application scenarios and implementation forms of the physical machines, the applications may be slightly different during implementation. Taking the physical machine being implemented as a terminal device such as a mobile phone or a computer as an example, the applications running in the physical machine may be an e-commerce shopping application, various video applications, an email application, an instant messaging application, various office applications, and the like. Taking the physical machine being implemented as a server device such as a conventional server, a cloud server, or a server cluster as an example, the applications running on the physical machine may be various databases or data warehouses, a streaming computing application, a log processing application, distributed computing, various virtual machines or containers, and the like.

Relative to the application, the operating system is a group of associated system software programs that manage and control various operations of the physical machine, apply and run hardware and software resources, and provide a common service to organize user interaction. In this embodiment of the present disclosure, the operating system serves as a bridge between the application and the hardware resource, and the operating system includes driver programs of various hardware resources, for driving the various hardware resources. In addition, the operating system of this embodiment further includes: a sleep controller configured to perform sleep control on a physical computing resource object, and a resource scheduler configured to schedule the physical computing resource object. In this embodiment, to enable the physical computing resource object to properly enter and exit from a sleep state, a new sleep controller and a new resource scheduler are provided. For ease of description and differentiation, the new sleep controller and the new resource scheduler provided in this embodiment of the present disclosure are respectively referred to as a target sleep controller 11 and a target resource scheduler 12. It is described herein that the operating system may include only the target sleep controller 11 and the target resource scheduler 12, or may include other sleep controllers and other resource schedulers, which can be determined based on an application requirement and an application scenario without specific limitations. Next, a process in which the target sleep controller 11 and the target resource scheduler 12 cooperate with each other to perform sleep control and resource scheduling on the physical computing resource object is mainly described.

In this embodiment, the target sleep controller 11 may maintain sleep state transition prediction information respectively corresponding to a plurality of physical computing resource objects, where sleep state transition prediction information corresponding to any physical computing resource object is used for predicting state transition statuses of the physical computing resource object in different sleep states. The sleep state transition prediction information may include probability information of entering each sleep state during the subsequent sleep when a corresponding physical computing resource object is woken up from any sleep state. Where the probability information may be implemented as a probability value, or may be implemented as a weight, which is not limited. For example, it is assumed that a physical computing resource object may support a sleep state C0, a sleep state C1, and a sleep state C2. Sleep state transition prediction information corresponding to the physical computing resource object may include: a probability, such as 70%, of entering the sleep state C0, a probability, such as 15%, of entering the sleep state C1, and a probability, such as 15% of entering the sleep state C2 during the subsequent sleep when the physical computing resource object is woken up from the sleep state C0; a probability, such as 30%, of entering the sleep state C0, a probability, such as 40%, of entering the sleep state C1, and a probability, such as 20%, of entering the sleep state C2 during the subsequent sleep when the physical computing resource object is woken up from the sleep state C1; and a probability, such as 50%, of entering the sleep state C0, a probability, such as 15%, of entering the sleep state C1, and a probability, such as30%, of entering the sleep state C2 during the subsequent sleep when the physical computing resource object is woken up from the sleep state C2.

In this embodiment, the target sleep controller 11 may disclose the sleep state transition prediction information respectively corresponding to the plurality of physical computing resource objects maintained by the target sleep controller 11 to the target resource scheduler 12. Optionally, the target sleep controller 11 may actively provide the sleep state transition prediction information respectively corresponding to the plurality of physical computing resource objects maintained by the target sleep controller 11 to the target resource scheduler 12. Alternatively, the target resource scheduler 12 may actively request the target sleep controller 11, and the target sleep controller 11 provides, based on the request, the sleep state transition prediction information respectively corresponding to the plurality of physical computing resource objects maintained by the target sleep controller 11 to the target resource scheduler 12. When performing task scheduling, the target resource scheduler 12 may select a target physical computing resource object based on the sleep state transition prediction information respectively corresponding to the plurality of physical computing resource objects, and schedule a to-be-scheduled target task to the target physical computing resource object. For example, based on the sleep state transition prediction information respectively corresponding to the plurality of physical computing resource objects, the target resource scheduler 12 may select, from a physical computing resource object D1, a physical computing resource object D2, a physical computing resource object D3, and a physical computing resource object D4, the physical computing resource object D1 as the target physical computing resource object, and schedule the target task to the target physical computing resource object.

In the embodiment of the present disclosure, in a process in which the target resource scheduler 12 performs resource scheduling based on the sleep state transition prediction information respectively corresponding to the plurality of physical computing resource objects, a scheduling rule is preferentially scheduling a physical computing resource object that is not in a sleep state, is in a shallow sleep state, or has a high probability of entering a shallow sleep state. In this manner, resource scheduling for the physical computing resource object and sleep control for the physical computing resource object may be combined, and the physical computing resource object is scheduled based on maintained sleep state transition prediction information, so that a task can be scheduled to a physical computing resource object that is in a shallow or busy sleep state as much as possible. This helps to enable a part of physical computing resource objects to be in a deep sleep state for as long as possible or have as many opportunities as possible to be in a deep state, and enable a part of physical computing resource objects to be in a busy state as much as possible, to reduce a frequency that a physical computing resource object enters and exits from a sleep state, so as to reduce power consumption, and enable other physical computing resource objects to obtain a higher operating frequency as much as possible.

In some optional embodiments, with a change of a running state of a physical computing resource object, for example, a change from a sleep state to a working state, or a change from a working state to a sleep state, sleep state transition prediction information of each physical computing resource object changes. Therefore, sleep state transition prediction information of a physical computing resource object may further be updated, to obtain more accurate sleep state transition prediction information, so as to subsequently perform more accurate resource scheduling based on the sleep state transition prediction information. Where an update operation on sleep state transition prediction information may be performed by the target sleep controller 11 in a maintenance process.

Specifically, when maintaining the sleep state transition prediction information respectively corresponding to the plurality of physical computing resource objects, the target sleep controller 11 may monitor running states of the plurality of physical computing resource objects. The running states herein may include: a working state and a sleep state, and the sleep state may include a plurality of sleep states with different sleep depths. Actual sleep time of any physical computing resource object in a first sleep state may be obtained when monitoring that the physical computing resource object is woken up from the first sleep state. Where the first sleep state may be any sleep state. In other words, the target sleep controller 11 may obtain actual sleep time of the physical computing resource object in any sleep state when monitoring that the any physical computing resource object is woken up from the any sleep state. Further, sleep state transition prediction information corresponding to any physical computing resource object is updated based on the actual sleep time of the physical computing resource object in the first sleep state and exit latency time of the first sleep state.

The obtaining the actual sleep time of the physical computing resource object in the first sleep state may be performed by using the following step R1 and step R2.

Step R1: the target sleep controller 11 may obtain first time when the physical computing resource object enters the first sleep state and second time when the physical computing resource object is woken up from the first sleep state by a wake-up event. Where the wake-up event may be a timer expiration event, an interrupt event, or the like. The interrupt event refers to that when the physical computing resource object executes a normal program, some abnormal cases or special requests that need to be processed urgently occur in a system, and the physical computing resource object temporarily suspends a running task and switches to process a more emergent random task.

Step R2: calculate actual sleep time of the any physical computing resource object in the first sleep state based on the second time and the first time. The embodiment of the present disclosure does not limit an implementation of calculating the actual sleep time of the any physical computing resource object in the first sleep state based on the second time and the first time. Optionally, the target sleep controller 11 may calculate a difference between the second time and the first time as the actual sleep time of the any physical computing resource object in the first sleep state. Alternatively, the target sleep controller 11 may correct a difference between the second time and the first time by using a preset difference correction rule, and use the corrected difference as the actual sleep time of the any physical computing resource object in the first sleep state. Alternatively, the target sleep controller 11 may perform a weighted summation on the second time and the first time based on respective preset weights of the second time and the first time, to obtain the actual sleep time of the any physical computing resource object in the first sleep state.

After obtaining the actual sleep time of the any physical computing resource object in the first sleep state, the target sleep controller 11 may update the sleep state transition prediction information corresponding to the any physical computing resource object based on the actual sleep time and the exit latency time of the first sleep state. Specifically, based on different matching situations between the actual sleep time of the any physical computing resource object in the first sleep state and the exit latency time of the first sleep state, manners of updating the sleep state transition prediction information corresponding to the any physical computing resource object may also be different. In this embodiment of the present disclosure, a manner of defining whether the actual sleep time of the any physical computing resource object in the first sleep state matches the exit latency time of the first sleep state is not limited, and may be specifically flexibly defined based on an application requirement. Where the target sleep controller 11 may determine whether the actual sleep time of the any physical computing resource object in the first sleep state matches the exit latency time of the first sleep state in any one of the following manners.

Manner 1: the target sleep controller 11 may determine whether the actual sleep time of the any physical computing resource object in the first sleep state is the same as the exit latency time of the first sleep state. If the actual sleep time of the any physical computing resource object in the first sleep state is the same as the exit latency time of the first sleep state, the actual sleep time of the any physical computing resource object in the first sleep state matches the exit latency time of the first sleep state; and if the actual sleep time of the any physical computing resource object in the first sleep state is different from the exit latency time of the first sleep state, the actual sleep time of the any physical computing resource object in the first sleep state does not match the exit latency time of the first sleep state.

Manner 2: the target sleep controller 11 may further calculate an error between the actual sleep time of the any physical computing resource object in the first sleep state and the exit latency time of the first sleep state. If the error is within a preset error range, the actual sleep time of the any physical computing resource object in the first sleep state matches the exit latency time of the first sleep state; and if the error is not within the preset error range, the actual sleep time of the any physical computing resource object in the first sleep state does not match the exit latency time of the first sleep state.

Manner 3. the target sleep controller 11 may determine whether the actual sleep time of the any physical computing resource object in the first sleep state is within a multiple range of the exit latency time of the first sleep state. If the actual sleep time of the any physical computing resource object in the first sleep state is within the multiple range of the exit latency time of the first sleep state, the actual sleep time of the any physical computing resource object in the first sleep state matches the exit latency time of the first sleep state; and if the actual sleep time of the any physical computing resource object in the first sleep state is not within the multiple range of the exit latency time of the first sleep state, the actual sleep time of the any physical computing resource object in the first sleep state does not match the exit latency time of the first sleep state.

Manner 4: the target sleep controller 11 may further determine whether the actual sleep time of the any physical computing resource object in the first sleep state is greater than the exit latency time of the first sleep state. If the actual sleep time of the any physical computing resource object in the first sleep state is greater than the exit latency time of the first sleep state, the target sleep controller 11 further determines whether a difference between the actual sleep time of the any physical computing resource object in the first sleep state and the exit latency time of the first sleep state is greater than a specified difference threshold. If the difference between the actual sleep time of the any physical computing resource object in the first sleep state and the exit latency time of the first sleep state is greater than the specified difference threshold, the actual sleep time of the any physical computing resource object in the first sleep state matches the exit latency time of the first sleep state. If any one of the foregoing determining operations is no, the actual sleep time of the any physical computing resource object in the first sleep state does not match the exit latency time of the first sleep state.

Regardless of how to define whether the actual sleep time of the any physical computing resource object in the first sleep state matches the exit latency time of the first sleep state, there may be two cases: Case 1, the actual sleep time of the any physical computing resource object in the first sleep state matches the exit latency time of the first sleep state, and Case 2, the actual sleep time of the any physical computing resource object in the first sleep state does not match the exit latency time of the first sleep state. Descriptions are provided below by using cases.

Case 1: when the actual sleep time of the any physical computing resource object in the first sleep state matches the exit latency time of the first sleep state, it indicates that the first sleep state is a good sleep state for the any physical computing resource object. Therefore, probability information of re-entering the first sleep state during the subsequent sleep when the any physical computing resource object is woken up from the first sleep state may be relatively increased, to re-enter the first sleep state with a high probability when needing to sleep at a next time.

Further optionally, an implementation of relatively increasing, by the target sleep controller 11, the probability information of re-entering the first sleep state during the subsequent sleep when the any physical computing resource object is woken up from the first sleep state includes: it may separately increase the probability information of re-entering the first sleep state during the subsequent sleep when the any physical computing resource object is woken up from the first sleep state; or it may separately decrease probability information of entering the other sleep state during the subsequent sleep when the any physical computing resource object is woken up from the first sleep state, where the other sleep state refers to a sleep state other than the first sleep state; or it may increase the probability information of re-entering the first sleep state during the subsequent sleep when the any physical computing resource object is woken up from the first sleep state and decrease the probability information of entering the other first sleep state during the subsequent sleep when the any physical computing resource object is woken up from the first sleep state.

For example, it is assumed that the any physical computing resource object is woken up from a sleep state C0 (for example, the sleep state C0 is the first sleep state), before the sleep state transition prediction information corresponding to the any physical computing resource object is updated, a probability of entering the sleep state C0 is 70%, a probability of entering a sleep state C1 is 15%, and a probability of entering a sleep state C2 is 15% during the subsequent sleep when the any physical computing resource object is woken up from the sleep state C0. When actual sleep time of the any physical computing resource object in the sleep state C0 matches exit latency time of the sleep state C0, and when the target sleep controller 11 updates the sleep state transition prediction information, the probability of entering the sleep state C0 during the subsequent sleep when the sleep state C0 is woken up may be separately increased from 70% to 80%, or the probabilities of entering the sleep state C1 and the sleep state C2 during the subsequent sleep when the sleep state C0 is woken up may be separately decreased from 15% to 10%, or the probability of entering the sleep state C0 during the subsequent sleep when the sleep state C0 is woken up is increased from 70% to 80%, and the probabilities of entering the sleep state C1 and the sleep state C2 are decreased from 15% to 10%. It is noted herein that in the foregoing example, the two probabilities of entering the sleep state C1 and the sleep state C2 being decreased in a same magnitude is taken as an example, or the probabilities thereof may be different. For example, the probability of entering the sleep state C1 is decreased by 10%, and the probability of entering the sleep state C2 is decreased by 5%.

Case 2: when the actual sleep time of the any physical computing resource object in the first sleep state does not match the exit latency time of the first sleep state, it indicates that the first sleep state is not a good sleep state for the any physical computing resource object. Therefore, a sleep state whose exit latency time matches the actual sleep time may be determined and recorded as a second sleep state. The second sleep state is a good sleep state for the any physical computing resource object. Therefore, probability information of entering the second sleep state during the subsequent sleep when the any physical computing resource object is woken up from the first sleep state is relatively increased, to enter the second sleep state with a high probability when needing to sleep during the subsequent sleep. Where the second sleep state is a sleep state whose exit latency time matches the actual sleep time. That is, when the actual sleep time does not match the exit latency time of the first sleep state, the target sleep controller 11 may relatively increase probability information corresponding to the sleep state whose exit latency time matches the actual sleep time, to accurately update the sleep state transition prediction information.

Specifically, in Case 2, the target sleep controller 11 may relatively increase, based on the following several implementations, the probability information of entering the second sleep state during the subsequent sleep when the any physical computing resource object is woken up from the first sleep state.

Implementation 1: separately increase the probability information of entering the second sleep state during the subsequent sleep when the any physical computing resource object is woken up from the first sleep state. For example, it is assumed that the any physical computing resource object is woken up from the sleep state C0 (for example, the sleep state C0 is the first sleep state), before the sleep state transition prediction information corresponding to the any physical computing resource object is updated, a probability of entering the sleep state C0 is 70%, a probability of entering the sleep state C1 (the second sleep state) is 15%, and a probability of entering the sleep state C2 is 15% during the subsequent sleep when the any physical computing resource object is woken up from the sleep state C0 (the first sleep state). When the actual sleep time of the any physical computing resource object in the sleep state C0 does not match the exit latency time of the sleep state C0, the probability of entering the sleep state C1 during the subsequent sleep when the any physical computing resource object is woken up from the sleep state C0 (the first sleep state) may be increased from 15% to 70% by the target sleep controller 11.

Implementation 2: increase the probability information of entering the second sleep state during the subsequent sleep when the any physical computing resource object is woken up from the first sleep state, and decrease the probability information of entering the other sleep state during the subsequent sleep when the any physical computing resource object is woken up from the first sleep state, where the other sleep state herein refers to a sleep state (including the first sleep state) other than the second sleep state. The foregoing example is still used as an example. When the actual sleep time of the any physical computing resource object in the sleep state C0 does not match the exit latency time of the sleep state C0, the probability of entering the sleep state C1 during the subsequent sleep when the any physical computing resource object is woken up from the sleep state C0 (the first sleep state) is increased from 15% to 70%, and the probabilities of entering the sleep states C0 and C2 are correspondingly decreased. For example, the probability of entering the sleep state C0 during the subsequent sleep when the any physical computing resource object is woken up from the sleep state C0 (the first sleep state) is decreased from 70% to 20%, and the probability of entering the sleep state C2 during the subsequent sleep when the any physical computing resource object is woken up from the sleep state C0 (the first sleep state) is decreased from 15% to 10%.

Implementation 3: separately decrease the probability information of entering the first sleep state during the subsequent sleep when the any physical computing resource object is woken up from the first sleep state. The foregoing example is still used as an example. When the actual sleep time of the any physical computing resource object in the sleep state C0 does not match the exit latency time of the sleep state C0, the probability of entering the sleep state C0 during the subsequent sleep when the any physical computing resource object is woken up from the sleep state C0 may be decrease from 70% to 15% by the target sleep controller 11.

Implementation 4: decrease the probability information of entering the first sleep state during the subsequent sleep when the any physical computing resource object is woken up from the first sleep state, and increase the probability information of entering the other sleep state during the subsequent sleep when the any physical computing resource object is woken up from the first sleep state, where the other sleep state herein refers to a sleep state (including the second sleep state) other than the first sleep state. The foregoing example is still used as an example. When the actual sleep time of the any physical computing resource object in the sleep state C0 does not match the exit latency time of the sleep state C0, the probability of entering the sleep state C0 during the subsequent sleep when the any physical computing resource object is woken up from the sleep state C0 (the first sleep state) is decreased from 70% to 20%, and the probabilities of entering the sleep states C1 and C2 are correspondingly increased. For example, the probability of entering the sleep state C1 during the subsequent sleep when the any physical computing resource object is woken up from the sleep state C0 (the first sleep state) may be increased from 15% to 60%, and the probability of entering the sleep state C2 during the subsequent sleep when the any physical computing resource object is woken up from the sleep state C0 (the first sleep state) may be increased from 15% to 20%.

Implementation 5: separately decrease the probability information of entering the other sleep state during the subsequent sleep when the any physical computing resource object is woken up from the first sleep state, where the other sleep state herein refers to a sleep state other than the first sleep state and the second sleep state. The foregoing example is still used as an example. The probability of entering the sleep state C2 during the subsequent sleep when the any physical computing resource object is woken up from the sleep state C0 may be increased from 15% to 5% by the target sleep controller 11.

In the foregoing manners, the target sleep controller may dynamically update sleep state transition prediction information based on a running state of a physical computing resource object, to maintain more accurate sleep state transition prediction information. On the one hand, the target sleep controller can more accurately select a sleep state that needs to be entered for the physical computing resource object during the subsequent sleep. On the other hand, the target sleep controller may also provide a more accurate data basis for resource scheduling based on the sleep state transition prediction information.

In the foregoing embodiment of the present disclosure, a specific manner used by the target sleep controller to maintain the sleep state transition prediction information is not limited. In some optional embodiments, the target sleep controller may create, in an initialization process, data structure bodies respectively corresponding to the plurality of physical computing resource objects; initialize the data structure bodies respectively corresponding to the plurality of physical computing resource objects, to obtain initial values of sleep state transition prediction information respectively corresponding to the plurality of physical computing resource objects; and then dynamically update, as running states of the physical computing resource objects change, the sleep state transition prediction information recorded in the data structure bodies based on the foregoing described manner. Where the data structure is used for storing sleep state transition prediction information corresponding to a corresponding physical computing resource object. The data structure is a data structure capable of storing information, and includes but is not limited to an array, a list, a linked list, a queue, and the like. In this embodiment of the present disclosure, an array is used as an example for example description, and the array is referred to as a sleep state weight array, but a form of a data structure is not limited.

Specifically, in the initialization process, the target sleep controller may create sleep state weight arrays respectively corresponding to the plurality of physical computing resource objects. The sleep state weight array is a multidimensional array including a plurality of rows and a plurality of columns, as shown in Table 2. In the sleep state weight array, a row represents a sleep state that a corresponding physical computing resource object may be in when being woken up, a column represents a sleep state that the corresponding physical computing resource object may enter during the subsequent sleep, an array element at an intersection of the row and the column represents a weight of entering the sleep state, represented by the column, by the corresponding physical computing resource object during the subsequent sleep when being woken up from the sleep state represented by the row, and a larger weight indicates a higher probability. It should be noted that before the initialization, an element value of the sleep state weight array should be a null value.

Next, the target sleep controller 11 may initialize sleep state weight arrays respectively corresponding to the plurality of physical computing resource objects, to obtain the initial values of the sleep state transition prediction information respectively corresponding to the plurality of physical computing resource objects. In an optional embodiment, the target sleep controller 11 may initialize an array element where a row number equals a column number to a first value, and initialize an array element where a row number is different a column number to a second value. Where the first value is greater than the second value, and a sum of a first value and a second value in the same row is a third value. As shown in Table 2, the third value may be 100, and the sum of the first value and the second value in the same row is 100. In addition, the third value may alternatively be any value such as 90, 120, or 150, which is not limited in this embodiment. Correspondingly, the first value and the second value may alternatively be any value when satisfying two conditions, to be specific, "the first value is greater than the second value" and "a sum of the first value and the second value in the same row is the third value", which is not limited in this embodiment. In Table 2, the first value being 70 and the second value being 15 are taken as an example for illustration. The following table is an initialized multidimensional array, and is merely used for example description to better describe meanings of the rows and the columns.

**Table 2**

| | C0 (First column) | C1 (Second column) | C2 (Third column) |
|---|---|---|---|
| C0 (First row) | 70 | 15 | 15 |
| C1 (Second row) | 15 | 70 | 15 |
| C2 (Third row) | 15 | 15 | 70 |

To be specific, in the sleep state weight array shown in Table 2, a row in which a sleep state C0 is located may indicate that: a weight of entering the sleep state C0 during the subsequent sleep when a corresponding physical computing resource object is woken up from the sleep state C0 is 70%, a weight of entering a sleep state C1 during the subsequent sleep when the corresponding physical computing resource object is woken up from the sleep state C0 is 15%, and a weight of entering a sleep state C2 during the subsequent sleep when the corresponding physical computing resource object is woken up from the sleep state C0 is 15%; a row in which the sleep state C1 is located may indicate that: a weight of entering the sleep state C0 during the subsequent sleep when the corresponding physical computing resource object is woken up from the sleep state C1 is 15%, a weight of entering the sleep state C1 during the subsequent sleep when the corresponding physical computing resource object is woken up from the sleep state C1 is 70%, and a weight of entering the sleep state C2 during the subsequent sleep when the corresponding physical computing resource object is woken up from the sleep state C1 is 15%; and a row in which the sleep state C2 is located may indicate that: a weight of entering the sleep state C0 during the subsequent sleep when the corresponding physical computing resource object is woken up from the sleep state C2 is 15%, a weight of entering the sleep state C1 during the subsequent sleep when the corresponding physical computing resource object is woken up from the sleep state C2 is 15%, and a weight of entering the sleep state C2 during the subsequent sleep when the corresponding physical computing resource object is woken up from the sleep state C2 is 70%.

Based on this, with reference to the sleep state weight array and the foregoing listed initialization manners, manners for adjusting the probability information such as "probability information of re-entering the first sleep state during the subsequent sleep when the any physical computing resource object is woken up from the first sleep state may be relatively increased" and "the target sleep controller may relatively increase the probability information of entering the second sleep state during the subsequent sleep when the any physical computing resource object is woken up from the first sleep state" mentioned in the foregoing embodiments are described exemplarily. It should be noted that, regardless of how the multidimensional array is updated, a sum of values in the same row in the multidimensional array after the values are increased or decreased is still a preset third value, which is further described below.

Optionally, in a case that the actual sleep time of the any physical computing resource object in the first sleep state matches the exit latency time of the first sleep state, the target sleep controller 11 may relatively increase the probability information of re-entering the first sleep state during the subsequent sleep when the any physical computing resource object is woken up from the first sleep state. Where the probability information of re-entering the first sleep state during the subsequent sleep when the any physical computing resource object is woken up from the first sleep state may be relatively increased to a fourth value by the target sleep controller 11, and the probability information of entering the other sleep state during the subsequent sleep when the any physical computing resource object is woken up from the first sleep state may be relatively increased to a fifth value by the target sleep controller 11. Where the fourth value may be greater than the fifth value, and values in the same row after addition are still the third value in the foregoing embodiment.

Optionally, in a case that the actual sleep time of the any physical computing resource object in the first sleep state does not match the exit latency time of the first sleep state, the target sleep controller 11 may relatively increase the probability information of entering the second sleep state during the subsequent sleep when the any physical computing resource object is woken up from the first sleep state. Where the probability information of entering the second sleep state during the subsequent sleep when the any physical computing resource object is woken up from the first sleep state may be relatively increased to a sixth value by the target sleep controller 11, and the probability information of entering the other sleep state during the subsequent sleep when the any physical computing resource object is woken up from the first sleep state may be relatively decrease d to a seventh value by the target sleep controller 11. The sixth value may be greater than the seventh value, and values in the same row after addition are still the third value in the foregoing embodiment.

In this manner, based on the foregoing initialized data structure, the target sleep controller 11 may more quickly update the sleep state transition prediction information corresponding to the any physical computing resource object by using the data structure.

In some optional embodiments, in addition to maintaining the sleep state transition prediction information corresponding to each physical computing resource object, the target sleep controller 11 may further monitor a task queue of the any physical computing resource object. When the task queue of the physical computing resource object is empty, or when the task queue of the physical computing resource object is empty and lasts for preset time, the target sleep controller 11 may determine that the physical computing resource object needs to sleep. The target sleep controller 11 may determine a third sleep state based on the sleep state transition prediction information corresponding to the physical computing resource object when monitoring that the physical computing resource object needs to sleep, and control the any physical computing resource object to enter the third sleep state. Where the third sleep state is any sleep state of the plurality of sleep states, and is a sleep state that the any physical computing resource object needs to enter at this time. The foregoing process is further described below with reference to an internal architecture and working principle of the operating system shown in FIG. 3.

As shown in FIG. 3, in a first step (as shown in ① of FIG. 3), a sleep state may be configured by using an ACPI specification. Specifically, the physical machine may obtain a fixed ACPI description table, and ACPI information of various fixed hardware is defined in the description table. Various sleep states supported by the any physical computing resource object and exit latency time corresponding to the various sleep states are obtained from the description table. In a second step (as shown in ② of FIG. 3), the target resource scheduler 12 may perform resource scheduling on each physical computing resource object. In a third step (as shown in ③ of FIG. 3), in a resource scheduling process, if monitoring that the task queue of the any physical computing resource object is empty, or the task queue of the physical computing resource object is empty and lasts for preset time, the target sleep controller 11 may determine, based on the maintained sleep state transition prediction information of the physical computing resource object, the third sleep state that the physical computing resource object needs to enter, and provide the third sleep state for a sleep management and control module 13. The sleep management and control module 13 selects a driver module 14 corresponding to the physical computing resource object, and controls, by using the driver module 14, the physical computing resource object to enter the third sleep state by using firmware corresponding to the physical computing resource object, as shown in ④ of FIG. 3. It should be noted herein that, in FIG. 3, taking the operating system including the target sleep controller 11, the target resource scheduler 12, the sleep management and control module 13, and the driver module 14 as an example for illustration, and is merely a schematic description of the internal architecture of the operating system. The internal implementation architecture of the operating system is not limited thereto.

Specifically, the target sleep controller 11 may determine the third sleep state based on the sleep state transition prediction information corresponding to the physical computing resource object, which may be implemented based on the following step Y1 to step Y4.

Step Y1: obtain, as a fourth sleep state, a sleep state recently exited by the any physical computing resource object. For example, sleep states exited by the physical computing resource object at a historical moment are sequentially a sleep state C1 and a sleep state C2, and the target sleep controller 11 may use, as the fourth sleep state, the sleep state C2 that the physical computing resource object recently exited.

Step Y2: obtain, from the sleep state transition prediction information corresponding to the any physical computing resource object, probability information of entering each sleep state during the subsequent sleep when being woken up from the fourth sleep state.

Step Y3: select a sleep state having maximum probability information as a candidate sleep state based on the probability information of entering each sleep state during the subsequent sleep when the any physical computing resource object is woken up from the fourth sleep state.

For example, the probability information, obtained by the target sleep controller 11, of entering each sleep state during the subsequent sleep when the physical computing resource object is woken up from the fourth sleep state is respectively: 15% for the sleep state C0, 70% for the sleep state C1, and 15% for the sleep state C2. Therefore, the target sleep controller 11 may select the sleep state C1 with the maximum probability information as the candidate sleep state.

Step Y4: when exit latency time of the candidate sleep state is less than maximum tolerable exit latency time of the system, use the candidate sleep state as the third sleep state. Where the maximum tolerable exit latency time of the system may be a preset fixed value, may be a value dynamically configured by the system based on a system operating condition, or may be a value customized by a user, which is not limited in this embodiment.

In addition to the foregoing case in step Y4 of "exit latency time of the candidate sleep state is less than maximum tolerable exit latency time of the system", the target sleep controller 11 may further select, when the exit latency time of the candidate sleep state is greater than or equal to the maximum tolerable exit latency time of the system, the other sleep state whose exit latency time is less than the maximum tolerable exit latency time of the system as the third sleep state. If there is one sleep state whose exit latency time is less than the maximum tolerable exit latency time of the system, the target sleep controller 11 may use the sleep state as the third sleep state. When there are a plurality of sleep states whose exit latency time is less than the maximum tolerable exit latency time of the system, the target sleep controller 11 may select a sleep state whose exit latency time is less than the maximum tolerable exit latency time of the system and whose probability information is maximum as the third sleep state.

In the foregoing manner, the target sleep controller 11 may accurately determine the third sleep state based on the sleep state transition prediction information corresponding to the physical computing resource object.

Based on execution logic corresponding to the target sleep controller 11 described in the foregoing embodiments, the target resource scheduler 12 may further collaborate with the target sleep controller, to complete joint scheduling on the target task, which is further described below.

The target resource scheduler 12 selects a target physical computing resource object based on the sleep state transition prediction information respectively corresponding to the plurality of physical computing resource objects, which may be implemented based on the following step U1 and step U2.

Step U1: in response to a resource scheduling trigger event, generate, based on the sleep state transition prediction information respectively corresponding to the plurality of physical computing resource objects, sleep habit information respectively corresponding to the plurality of physical computing resource objects. Where the resource scheduling trigger event includes: a time interrupt, a peripheral interrupt, a current application actively giving up running, a higher-priority application needing to run, or the like.

Step U2: select, from the plurality of physical computing resource objects, the target physical computing resource object based on the sleep habit information respectively corresponding to the plurality of physical computing resource objects.

In the foregoing manner, the target resource scheduler 12 may more accurately select the target physical computing resource object from the plurality of physical computing resource objects based on the sleep habit information respectively corresponding to the plurality of physical computing resource objects.

In some optional embodiments, when performing step U1, the target resource scheduler 12 may generate, based on the following step U11 and step U12, the sleep habit information respectively corresponding to the plurality of physical computing resource objects.

Step U11: for the any physical computing resource object, obtain, from the sleep state transition prediction information corresponding to the any physical computing resource object, probability information of re-entering any sleep state during the subsequent sleep when the any physical computing resource object exits from the sleep state.

Step U12: generate sleep habit information corresponding to the any physical computing resource object based on the probability information of re-entering the any sleep state during the subsequent sleep when the any physical computing resource object exits from the sleep state. Where the target resource scheduler 12 may construct a data structure and write, into the data structure, the probability information of re-entering the any sleep state during the subsequent sleep when the any physical computing resource object exits from the sleep state, to obtain the sleep habit information corresponding to the physical computing resource object.

The data structure includes, but is not limited to, an array, a list, a linked list, a queue, and the like. Alternatively, the target resource scheduler 12 may directly use, as the sleep habit information corresponding to the physical computing resource object, the probability information of re-entering the any sleep state during the subsequent sleep when the any physical computing resource object exits from the sleep state.

For example, it is assumed that there are three sleep states, namely, the sleep state C0, the sleep state C1, and the sleep state C2. The target resource scheduler 12 may obtain, from the sleep state transition prediction information corresponding to the any physical computing resource object, a probability 40% of re-entering the sleep state C0 during the subsequent sleep when the physical computing resource object exits from the sleep state C0, a probability 35% of re-entering the sleep state C1 during the subsequent sleep when the physical computing resource object exits from the sleep state C1, and a probability 60% of re-entering the sleep state C2 during the subsequent sleep when the physical computing resource object exits from the sleep state C2. Based on this, the target resource scheduler 12 may use the foregoing probability information as the sleep habit information corresponding to the any physical computing resource object.

In some other optional embodiments, when performing step U1, the target resource scheduler 12 may further classify, through following two manners, the sleep habit information into two sleep habit types: a shallow sleep habit or a deep sleep habit, to obtain the sleep habit information. If a sleep habit type corresponding to a specific physical computing resource object is a shallow sleep habit, it indicates that the physical computing resource object tends to stay in a shallow sleep state. If a sleep habit type corresponding to a specific physical computing resource object is a deep sleep habit, it indicates that the physical computing resource object tends to stay in a deep sleep state, which is further described below.

If probability information of entering a shallowest sleep state during the subsequent sleep when the any physical computing resource object exits from the shallowest sleep state is maximum, the target resource scheduler 12 may determine that a sleep habit type corresponding to the any physical computing resource is a shallow sleep habit and generate a sleep probability of the any physical computing resource object in the shallow sleep habit based on the maximum probability information. Where the target resource scheduler 12 may directly use the maximum probability information as the sleep probability of the any physical computing resource object in the shallow sleep habit. Alternatively, the maximum probability information may be multiplied by a preset probability coefficient to obtain the sleep probability of the any physical computing resource object in the shallow sleep habit. A preset correction value may alternatively be added to the maximum probability information, to obtain the sleep probability of the any physical computing resource object under the shallow sleep habit, which is not limited in this embodiment.

If probability information of entering a deepest sleep state during the subsequent sleep when the any physical computing resource object exits from the deepest sleep state is maximum, it is determined a sleep habit type corresponding to the any physical computing resource object is a deep sleep habit, and a sleep probability of the any physical computing resource in the deep sleep habit is generated based on the maximum probability information. A manner for generating the sleep probability of the any physical computing resource in the deep sleep habit based on the maximum probability information is similar to the foregoing manner for generating the sleep probability of the any physical computing resource object in the shallow sleep habit, and details are not described herein again.

In this manner, the target resource scheduler 12 not only can obtain sleep habit information accurately, but also can classify the sleep habit information accurately into two types: a shallow sleep habit or a deep sleep habit.

In some optional embodiments, when selecting the target physical computing resource object from the plurality of physical computing resource objects, the target resource scheduler 12 may determine, based on sleep habit information respectively corresponding to the plurality of physical computing resource objects, at least one candidate physical computing resource object corresponding to the shallow sleep habit. For example, there are five physical computing resource objects in total, which are a physical computing resource object D1 to a physical computing resource object D5, and sleep habit information corresponding to each physical computing resource object respectively corresponds to a shallow sleep habit, a shallow sleep habit, a deep sleep habit, a deep sleep habit, and a deep sleep habit. The target resource scheduler 12 may use the physical computing resource object D1 and the physical computing resource object D2 as candidate physical computing resource objects.

After determining the at least one candidate physical computing resource object corresponding to the shallow sleep habit, based on a sleep probability of the at least one candidate physical computing resource object in the shallow sleep habit, the target resource scheduler 12 may select, as the target physical computing resource object, a candidate physical computing resource object whose sleep probability satisfies a requirement.

Specifically, the target resource scheduler 12 may select the target physical computing resource object from the at least one candidate physical computing resource object based on the sleep probability of the at least one candidate physical computing resource object in the shallow sleep habit and with reference to other auxiliary information. The other auxiliary information may include: at least one of a type of the resource scheduling trigger event, a current running state of the candidate physical computing resource object, or a current utilization rate of the candidate physical computing resource object. The following is described by case.

Optionally, the other auxiliary information being the type of the resource scheduling trigger event is taken as an example. When selecting the target physical computing resource object from the at least one candidate physical computing resource object, the target resource scheduler 12 may select the target physical computing resource object based on the sleep probability of the at least one candidate physical computing resource object in the shallow sleep habit and the type of the resource scheduling trigger event. Where the target resource scheduler 12 may first select at least one target candidate physical computing resource object from the at least one candidate physical computing resource object based on the type of the resource scheduling trigger event. A correspondence between the type of the resource scheduling trigger event and a physical computing resource object corresponding to the resource scheduling trigger event may be maintained by the target resource scheduler 12. Then, the target resource scheduler 12 may select, as the target physical computing resource object, a candidate physical computing resource object having a highest sleep probability from the at least one target candidate physical computing resource object.

Optionally, the other auxiliary information being the current running state of the candidate physical computing resource object is taken as an example. When selecting the target physical computing resource object from the at least one candidate physical computing resource object, the target resource scheduler 12 may select the target physical computing resource object based on a current running state of the at least one candidate physical computing resource object and the sleep probability in the shallow sleep habit. Based on the current running state of the at least one candidate physical computing resource object, the target resource scheduler 12 may first select, from the at least one candidate physical computing resource object, at least one target candidate physical computing resource object whose running state satisfies a preset state condition, and select, as the target physical computing resource object, a candidate physical computing resource object having a highest sleeping probability from the at least one target candidate physical computing resource object.

Optionally, the other auxiliary information being the current utilization rate of the candidate physical computing resource object is taken as an example. When selecting the target physical computing resource object from the at least one candidate physical computing resource object, based on the sleep probability of the at least one candidate physical computing resource object in the shallow sleep habit and the current utilization rate, the target resource scheduler 12 may select, as the target physical computing resource object, a candidate physical computing resource object whose utilization rate satisfies a requirement and whose sleep probability is maximum. A requirement corresponding to the utilization rate may be set to any condition based on an actual requirement, for example, not greater than 80%, not greater than 70%, or not greater than 60%, which is not limited in this embodiment.

In the foregoing manner, due to combination of the other auxiliary information, the target resource scheduler 12 may more accurately select the target physical computing resource object from the at least one candidate physical computing resource object based on the sleep probability of the at least one candidate physical computing resource object in the shallow sleep habit.

Based on the foregoing embodiments, the plurality of physical computing resource objects mentioned in the foregoing embodiment may be multi-core processors. In addition, the physical machine mentioned in the foregoing embodiment may be applicable to a vertical/dedicated application scenario. When applied to the vertical/dedicated scenario, the operating system of the physical machine may include only the target resource scheduler and the target sleep controller, to implement the foregoing embodiments.

In addition, the physical machine may further be configured to be applied to various general scenarios. In a general scenario, the operating system mentioned in the foregoing embodiment may further include other resource schedulers and other sleep controllers. Sleep control logic of different sleep controllers is different, resource scheduling logic of different resource schedulers is different, and a user is allowed to flexibly select a specific sleep controller and a specific resource scheduler to use based on an application requirement.

For example, the operating system may include several other resource schedulers, several other sleep controllers, and the target sleep controller and the target resource scheduler in the foregoing embodiment. Different other resource schedulers and different other sleep controllers are independent of each other. The concept of being independent of each other means that each other resource scheduler may perform resource scheduling based on scheduling logic itself, and each other sleep controller may perform sleep control based on sleep control logic itself. In other words, a resource scheduling process of the other resource scheduler does not depend on a sleep control process of any other sleep controller, and the other resource scheduler is decoupled from the other sleep controller. A user may use the several other resource schedulers and the several other sleep controllers in any combination. Specifically, the physical machine may determine one resource scheduler and one sleep controller from the several other resource schedulers and the several other sleep controllers in response to a selection operation of the user. The selected resource scheduler and sleep controller are configured to take effect, so as to perform scheduling of the target task based on the resource scheduler and the sleep controller. The embodiment of the present disclosure does not limit sleep control logic of any other sleep controller, nor limit resource scheduling logic of any other resource scheduler. The physical machine may further select, in response to the selection operation of the user, the target resource scheduler and the target sleep controller to cooperate with scheduling of the target task. That is, the target resource scheduler and the target sleep controller are configured to take effect. Compared with other resource schedulers and other sleep controllers, the target resource scheduler and the target sleep controller need to be used in combination. The target resource scheduler and the target sleep controller are associated and affect each other. It should be noted that, when any resource scheduler of the other resource schedulers and any sleep controller of the other sleep controllers are configured to take effect, the target resource scheduler and the target sleep controller are configured to be disabled.

The following provides an example description of sleep control logic of the other sleep controller by using an example in which the operating system is Linux.

The Linux system may usually be configured with a plurality of sleep controllers such as a menu (literally translated as a menu) sleep controller, a timer events oriented (timer events oriented, teo) sleep controller, and a ladder (literally translated as a ladder) sleep controller. Where the menu sleep controller is a sleep controller that attempts to predict idle duration and selects a sleep state for a physical computing resource object by using a predicted value. For detailed sleep control logic of the menu sleep controller, refer to descriptions in the following embodiment. The teo sleep controller is a sleep controller that attempts to find a deepest sleep state suitable for a given condition. Specifically, the teo sleep controller monitors idle duration of each physical computing resource object, attempts to compare an observed idle duration value with an available sleep state, and uses the information to select a sleep state that is most likely to "match" an upcoming idle interval of a physical computing resource object. The ladder sleep controller is a sleep controller that gradually enters various sleep states from shallow to deeper. That is, the ladder sleep controller preferentially enters a shallower sleep state, and determines, based on sleep duration, whether to enter a deeper sleep state at a next level.

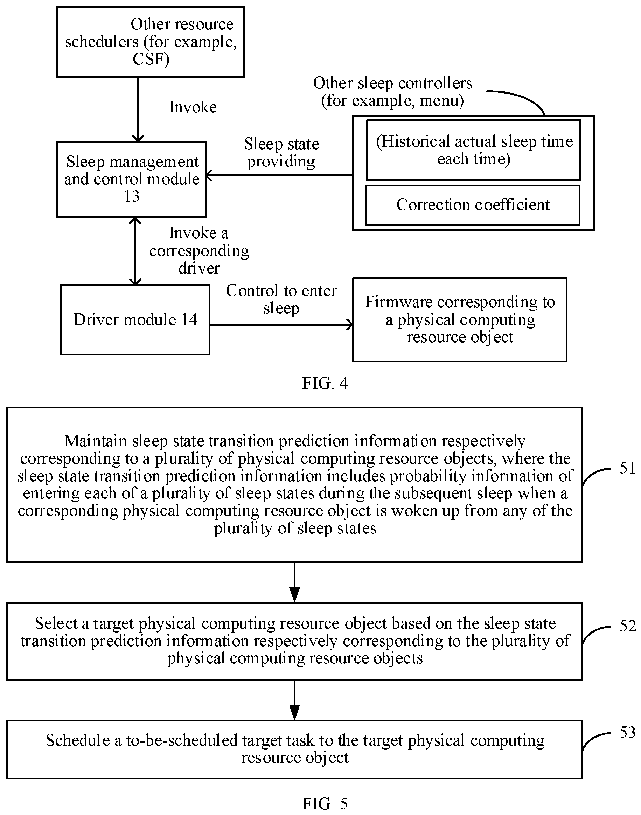

In the embodiment of the present disclosure, it is assumed that the user selects other sleep controllers and other resource schedulers. The menu sleep controller and a CFS (Completely Fair Scheduler, completely fair scheduler) resource scheduler are used as an example. As shown in FIG. 4, working logic therebetween is decoupled. The CFS performs resource scheduling on a physical computing resource object based on a resource scheduling policy itself. In this process, the menu performs sleep control based on sleep control logic itself. The sleep control logic is specifically as follows.
(1) The menu sleep controller may record historical actual sleep time each time, to predict next sleep time.
(2) The menu sleep controller may calculate a correction coefficient based on the historical actual sleep time each time. The correction coefficient may be used to predict impact of factors such as I/O (Input/Output, input/output) on the actual sleep time, so as to correct the impact in subsequent steps. Specifically, the sleep controller may calculate the correction coefficient according to the following formula: $Correction coefficient = 1024 \times actual sleep time \div estimated sleep time$
(3) If the historical actual sleep time each time satisfies the following condition: a standard deviation<20 and a variance<=400, the menu sleep controller may use an average value of the historical actual sleep time each time as the next sleep time.
(4) The menu sleep controller may obtain the number of threads that are in an I/O wait state, where the I/O wait state refers to a state of waiting for a magnetic disk I/O request to be completed.
(5) The menu sleep controller may correct the subsequent sleep time by using the number of threads in the I/O wait state and the correction coefficient.
(6) The menu sleep controller may obtain exit latency time that is in a range of a device and a system and that is set by pm qos (power management quality of service, power management quality of service), and select a minimum value therefrom as a first latency tolerance latency_req. Then, the sleep controller may predict a second latency tolerance based on the following formula: 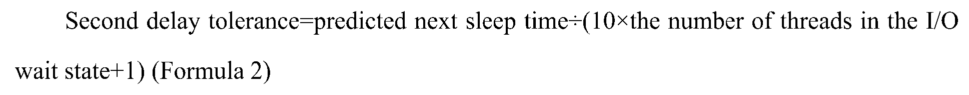 Second delay tolerance=predicted next sleep time÷(10×the number of threads in the I/O wait state+1) (Formula 2)
(7) The menu sleep controller may correct the first latency tolerance by using the second latency tolerance, that is, select a minimum value from the second latency tolerance and the first latency tolerance as a corrected target tolerance.
(8) The menu sleep controller may select, from a plurality of preset sleep states, a deepest sleep state whose exit latency time is less than or equal to the target tolerance, and then the sleep controller may control a physical computing resource object to enter the sleep state.

It should be noted that the control logic of the menu sleep controller described above has a plurality of defects. For example, the control logic cannot be interacted with a resource scheduler to reduce the number of times that the physical computing resource object enters and exits from a sleep state. The control logic further has a defect of high power consumption caused by the number of frequent times that the physical computing resource object enters and exits from a sleep state. In addition, a high failure rate of a predicted sleep state also causes a waste of power consumption. This also verifies, from another perspective, the technical effects generated by the interaction between the target resource scheduler and the target sleep controller in the foregoing embodiments of the present disclosure.

In addition to the physical machine provided in the foregoing embodiments, an embodiment of the present disclosure further provides a computing resource processing method. The following provides descriptions with reference to the drawings.

FIG. 5 is a schematic flowchart of a computing resource processing method according to an example embodiment of the present disclosure. The method may include steps shown in FIG. 5.

Step 51: maintain sleep state transition prediction information respectively corresponding to a plurality of physical computing resource objects, where the sleep state transition prediction information includes probability information of entering each of a plurality of sleep states during the subsequent sleep when a corresponding physical computing resource object is woken up from any of the plurality of sleep states.

Step 52: select a target physical computing resource object based on the sleep state transition prediction information respectively corresponding to the plurality of physical computing resource objects.

Step 53: schedule a to-be-scheduled target task to the target physical computing resource object.

It should be noted that an executive entity of this method embodiment may be an operating system, and may be specifically a target resource scheduler and a target sleep controller in the operating system. executive entities for different steps can be different. For example, some steps may be performed by the target resource scheduler, and some steps may be performed by the target sleep controller, which is not limited in this embodiment.

In this embodiment, resource scheduling for a physical computing resource object may be combined with sleep control for the physical computing resource object. By way of maintaining sleep state transition prediction information respectively corresponding to a plurality of physical computing resource objects, and performing scheduling on the physical computing resource object based on the maintained sleep state transition prediction information, a task can be scheduled to a physical computing resource object that is shallow or busy in a sleep state as much as possible. This helps to enable a part of physical computing resource objects to be in a deep sleep state as long as possible, and enable a part of the physical computing resource objects to be in a busy state as much as possible, to reduce a frequency of entering or exiting from a sleep state by the physical computing resource object.

In some optional embodiments, the maintaining the sleep state transition prediction information respectively corresponding to the plurality of physical computing resource objects includes: obtaining actual sleep time of any physical computing resource object in a first sleep state when monitoring that the any physical computing resource object is woken up from the first sleep state, where the first sleep state is any sleep state; and updating sleep state transition prediction information corresponding to the any physical computing resource object based on the actual sleep time and exit latency time of the first sleep state.

In some optional embodiments, the obtaining the actual sleep time of the any physical computing resource object in the first sleep state when monitoring that the any physical computing resource object is woken up from the first sleep state includes: obtaining first time at which the any physical computing resource object enters the first sleep state and second time at which the any physical computing resource object is woken up from the first sleep state by a wake-up event; and calculating the actual sleep time of the any physical computing resource object in the first sleep state based on the second time and the first time.

In some optional embodiments, the updating the sleep state transition prediction information corresponding to the any physical computing resource object based on the actual sleep time and the exit latency time of the first sleep state includes: in a case that the actual sleep time matches the exit latency time of the first sleep state, relatively increasing probability information of re-entering the first sleep state during the subsequent sleep when the any physical computing resource object is woken up from the first sleep state; or in a case that the actual sleep time does not match the exit latency time of the first sleep state, relatively increasing probability information of entering a second sleep state during the subsequent sleep when the any physical computing resource object is woken up from the first sleep state, where the second sleep state is a sleep state whose exit latency time matches the actual sleep time.

In some optional embodiments, the relatively increasing the probability information of re-entering the first sleep state during the subsequent sleep when the any physical computing resource object is woken up from the first sleep state includes: increasing the probability information of re-entering the first sleep state during the subsequent sleep when the any physical computing resource object is woken up from the first sleep state; and/or decreasing probability information of entering the other sleep state during the subsequent sleep when the any physical computing resource object is woken up from the first sleep state, where the other sleep state is a sleep state other than the first sleep state.

In some optional embodiments, the relatively increasing the probability information of entering the second sleep state during the subsequent sleep when the any physical computing resource object is woken up from the first sleep state includes: increasing the probability information of entering the second sleep state during the subsequent sleep when the any physical computing resource object is woken up from the first sleep state; and/or decreasing the probability information of entering the first sleep state during the subsequent sleep when the any physical computing resource object is woken up from the first sleep state; and/or decreasing probability information of entering the other sleep state during the subsequent sleep when the physical computing resource object is woken up from the first sleep state, where the other sleep state is a sleep state other than the first sleep state and the second sleep state.

In some optional embodiments, the method further includes: creating data structure bodies respectively corresponding to the plurality of physical computing resource objects in an initialization process, where a data structure is used for storing sleep state transition prediction information corresponding to a corresponding physical computing resource object; and initializing the data structure bodies respectively corresponding to the plurality of physical computing resource objects, to obtain initial values of the sleep state transition prediction information respectively corresponding to the plurality of physical computing resource objects.

In some optional embodiments, the creating the data structure bodies respectively corresponding to the plurality of physical computing resource objects includes: creating sleep state weight arrays respectively corresponding to the plurality of physical computing resource objects, where the sleep state weight array is a multidimensional array including a plurality of rows and a plurality of columns, where a row represents a sleep state that a corresponding physical computing resource object may be in when being woken up, and a column represents a sleep state that the corresponding physical computing resource object may enter during the subsequent sleep, and an array element at an intersection of the row and the column represents a weight for the corresponding physical computing resource object to enter the sleep state represented by the column during the subsequent sleep when being woken up from the sleep state represented by the row, where a larger weight indicates a higher probability.

In some optional embodiments, the initializing the data structure bodies respectively corresponding to the plurality of physical computing resource objects includes: initializing an array element where a row number equals a column number to a first value, and initializing an array element where a row number is different from a column number to a second value, where the first value is greater than the second value, and a sum of a first value and a second value in the same row is a third value.

In some optional embodiments, the method further includes: determining a third sleep state based on sleep state transition prediction information corresponding to any physical computing resource object when monitoring that the any physical computing resource object needs to sleep; and controlling the any physical computing resource object to enter the third sleep state.

In some optional embodiments, the determining the third sleep state based on the sleep state transition prediction information corresponding to the any physical computing resource object includes: obtaining, as a fourth sleep state, a sleep state recently exited by the any physical computing resource object; obtaining, from the sleep state transition prediction information corresponding to the any physical computing resource object, probability information of entering each sleep state during the subsequent sleep when the any physical computing resource object is woken up from the fourth sleep state; and based on the probability information of entering each sleep state during the subsequent sleep when being woken up from the fourth sleep state, selecting, as a candidate sleep state, a sleep state that has maximum probability information and in a case that exit latency time of the candidate sleep state is less than maximum tolerable exit latency time of a system, using the candidate sleep state as the third sleep state.

In some optional embodiments, the method further includes: when the exit latency time of the candidate sleep state is greater than or equal to the maximum tolerable exit latency time of the system, selecting the other sleep state whose exit latency time is less than the maximum tolerable exit latency time of the system as the third sleep state.

In some optional embodiments, the selecting the other sleep state whose exit latency time is less than the maximum tolerable exit latency time of the system as the third sleep state includes: when there are a plurality of sleep states whose exit latency time is less than the maximum tolerable exit latency time of the system, selecting a sleep state whose exit latency time is less than the maximum tolerable exit latency time of the system and whose probability information is maximum as the third sleep state.

In some optional embodiments, the selecting the target physical computing resource object based on the sleep state transition prediction information respectively corresponding to the plurality of physical computing resource objects includes: in response to a resource scheduling trigger event, generating, based on the sleep state transition prediction information respectively corresponding to the plurality of physical computing resource objects, sleep habit information respectively corresponding to the plurality of physical computing resource objects; and selecting, from the plurality of physical computing resource objects, the target physical computing resource object based on the sleep habit information respectively corresponding to the plurality of physical computing resource objects.

In some optional embodiments, the generating, based on the sleep state transition prediction information respectively corresponding to the plurality of physical computing resource objects, the sleep habit information respectively corresponding to the plurality of physical computing resource objects includes: for any physical computing resource object, obtaining, from sleep state transition prediction information corresponding to the any physical computing resource object, probability information of re-entering any sleep state during the subsequent sleep when the any physical computing resource object exits from the sleep state; and generating sleep habit information corresponding to the any physical computing resource object based on the probability information of re-entering the any sleep state during the subsequent sleep when the any physical computing resource object exits from the sleep state.

In some optional embodiments, the generating the sleep habit information corresponding to the any physical computing resource object based on the probability information of re-entering the any sleep state during the subsequent sleep when the any physical computing resource object exits from the sleep state includes: if probability information of entering a shallowest sleep state during the subsequent sleep when the any physical computing resource object exits from the shallowest sleep state is maximum, determining that a sleep habit type corresponding to the any physical computing resource is a shallow sleep habit, and generating a sleep probability of the any physical computing resource object in the shallow sleep habit based on the maximum probability information; or if probability information of entering a deepest sleep state during the subsequent sleep when the any physical computing resource object exits from the deepest sleep state is maximum, determining that a sleep habit type corresponding to the any physical computing resource object is a deep sleep habit, and generating a sleep probability of the any physical computing resource in the deep sleep habit based on the maximum probability information.

In some optional embodiments, the selecting the target physical computing resource object from the plurality of physical computing resource objects based on the sleep habit information respectively corresponding to the plurality of physical computing resource objects includes: determining, based on the sleep habit information respectively corresponding to the plurality of physical computing resource objects, at least one candidate physical computing resource object corresponding to the shallow sleep habit; and based on a sleep probability of the at least one candidate physical computing resource object in the shallow sleep habit, selecting, as the target physical computing resource object, a candidate physical computing resource object whose sleep probability satisfies a requirement.

In some optional embodiments, based on the sleep probability of the at least one candidate physical computing resource object in the shallow sleep habit, selecting, as the target physical computing resource object, the candidate physical computing resource object whose sleep probability satisfies the requirement includes: selecting the target physical computing resource object from the at least one candidate physical computing resource object based on the sleep probability of the at least one candidate physical computing resource object in the shallow sleep habit and with reference to other auxiliary information, where the other auxiliary information includes at least one of a type of a resource scheduling trigger event, a current running state of the candidate physical computing resource object, or a current utilization rate of the candidate physical computing resource object.

In some optional embodiments, the selecting the target physical computing resource object from the at least one candidate physical computing resource object based on the sleep probability of the at least one candidate physical computing resource object in the shallow sleep habit and with reference to the other auxiliary information includes: based on the sleep probability of the at least one candidate physical computing resource object in the shallow sleep habit and the current utilization rate, selecting, as the target physical computing resource object, a candidate physical computing resource object whose utilization rate satisfies the requirement and whose sleep probability is maximum.

Detailed implementations and beneficial effects of steps in the method of this embodiment have been described in detail in the foregoing embodiment, and are not described in detail herein.

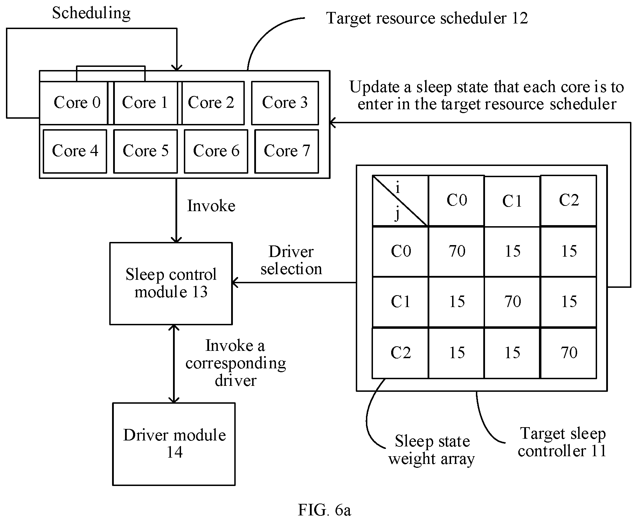

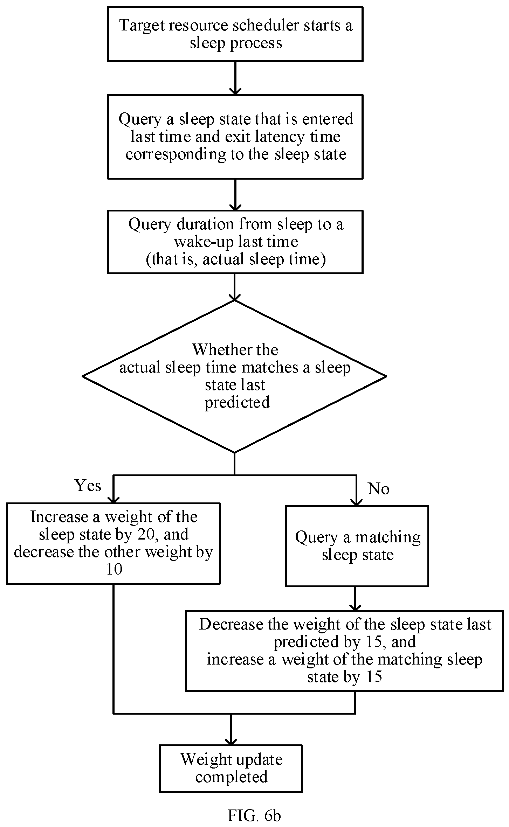

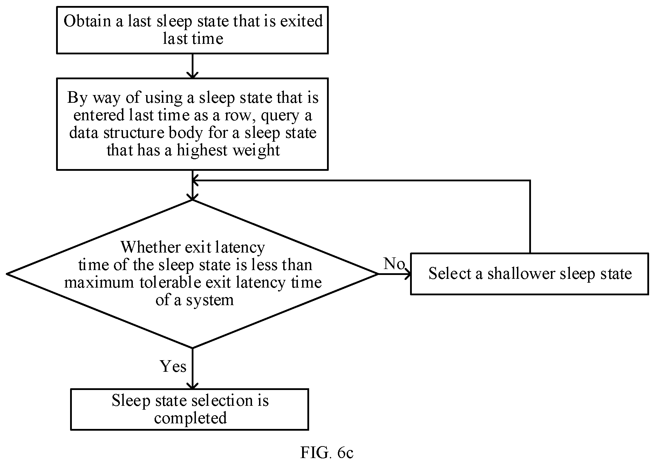

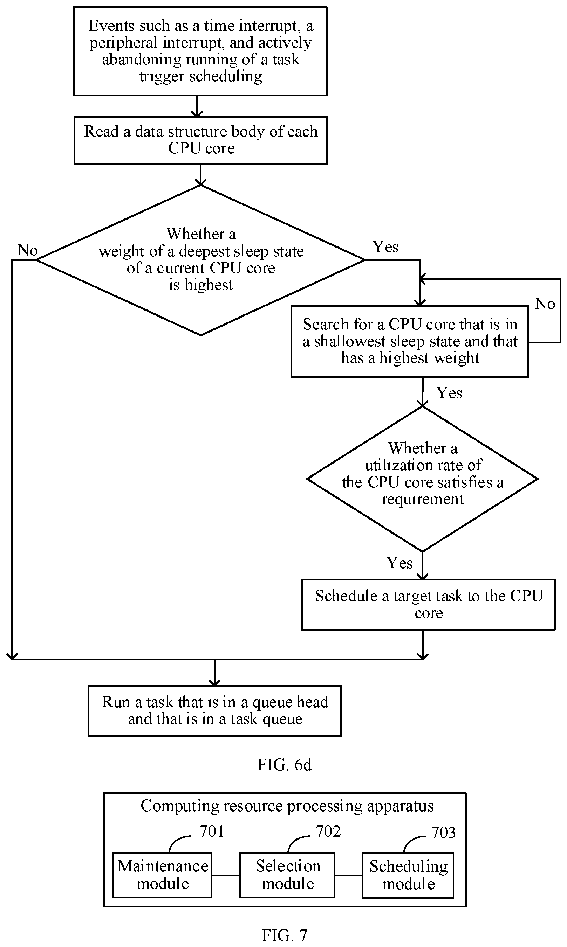

Implementations of the embodiments of the method shown in FIG. 5 are described in detail below with reference to FIG. 6a, FIG. 6b, FIG. 6c, and FIG. 6d by using a multi-core CPU and a CPU core included in the multi-core CPU as an example.

FIG. 6a is a schematic diagram of deployment implementation of a computing resource processing method in an actual application scenario according to an embodiment of the present disclosure.

A target sleep controller may perform initialization and create a data structure, such as an array in a format of weight [] [], for each CPU core (that is, the physical computing resource object in the foregoing specification) during initialization. Where a row represents a sleep state that a corresponding physical computing resource object may be in when being woken up, a column represents a sleep state that the corresponding physical computing resource object may enter during the subsequent sleep, an array element at an intersection of the row and the column represents a weight of entering the sleep state, represented by the column, by the corresponding physical computing resource object during the subsequent sleep when being woken up from the sleep state represented by the row, and a larger weight indicates a higher probability.

The target sleep controller may initialize the data structure. Specifically, when subscripts of arrays i and j are the same, the target sleep controller may initialize elements that intersect rows and columns to be as 70. The target sleep controller may initialize these elements as (100-70)/2=15 when the subscripts of the arrays i and j are different. It should be noted that, regardless of initialization or a subsequent element update process, elements in each row should always satisfy a condition that addition of the elements is 100. FIG. 6a exemplarily shows the initialized data structure. Three sleep states C0 to C2 are used as an example for illustration, and eight CPU cores are used as an example for illustration. The eight CPU cores shown in FIG. 6a are respectively a core 0 to a core 7.

After initialization, the target sleep controller may further perform state monitoring on each CPU core, and update the data structure according to a state monitoring result. The following describes the update process with reference to FIG. 6b.

As shown in FIG. 6b, the target resource scheduler may start a sleep process when a task queue in the physical computing resource object is null, and query a sleep state that is entered last time and exit latency time corresponding to the sleep state. The target sleep controller may determine actual sleep time based on time when the target sleep controller entered the sleep state last time and time when the target resource scheduler is woken up by a wake-up event. The wake-up event may be a timer expiration event or an interrupt event. Then, the target sleep controller may determine a sleep state that best matches time for which the sleep actually lasts.

When determining that the actual sleep time matches a sleep state last predicted, the target sleep controller may increase a weight of the sleep state by 20, and decrease the other weight by 10; or when determining that the actual sleep time does not match the sleep state last predicted, the target sleep controller may increase the weight, of the sleep state that best matching the time for which sleep actually lasts, by 15, and decrease the sleep state last predicted by 15.

As shown in FIG. 6b, in this manner, the target sleep controller may accurately update the data structure.

Based on the foregoing content, the target sleep controller may accurately select a sleep state from a plurality of sleep states based on the data structure. The following provides further description with reference to FIG. 6c.

As shown in FIG. 6c, for a CPU core that needs to re-enter a sleep state after being woken up, the target sleep controller may obtain a sleep state that is recently exited by the CPU core (that is, "obtain a last sleep state that is exited last time" in FIG. 6b), determine, by using the sleep state as a row, a sleep state with a highest weight in a plurality of columns of elements corresponding to the row, and use the sleep state as a state to be entered during the subsequent sleep. Then, the target sleep controller may determine whether exit latency time of the sleep state is less than a maximum tolerable exit latency time of a system. if not, the target sleep controller continues to select a shallower sleep state and continues to determine whether exit latency time of the selected sleep state is less than the maximum tolerable exit latency time of the system; or if yes, selection of the sleep state may be completed.

Based on execution logic corresponding to the target sleep controller described above, the target resource scheduler may further collaborate with the target sleep controller, to complete joint scheduling on the target task. The following provides further description with reference to FIG. 6d.

As shown in FIG. 6d, the target resource scheduler may read a data structure (a weight [][] array) of each CPU core in response to an event, for example, a time interrupt, a peripheral interrupt, actively abandoning running of a current application, or needing to run for a higher-priority application. For any CPU core, the target resource scheduler may determine whether a weight of a deepest sleep state of the CPU core is highest; and if yes, the target resource scheduler may continue to search for a CPU core that is in a shallowest sleep state and that has a highest weight, schedule a target task on the CPU core that is in the deepest sleep state to the CPU core that is in the shallowest sleep state and that has the highest weight, and may run a task that is in a queue head and that is in a task queue on the CPU core that is in the shallowest sleep state and that has the highest weight. In this manner, a task can be scheduled to a physical computing resource object that is shallow or busy in a sleep state as much as possible. This helps to enable a part of physical computing resource objects to be in a deep sleep state as long as possible and enable a part of the physical computing resource objects to be in a busy state as much as possible, to reduce a frequency of entering or exiting from a sleep state by the physical computing resource object.

It should be noted that, some processes described in the foregoing embodiments and drawings include a plurality of operations that appear in a specific sequence. However, it should be clearly understood that these operations may not be performed in the sequence in which the operations recorded in this specification or be performed in parallel. Sequence numbers of the operations, such as 51 and 52, are merely used for distinguishing different operations, and the sequence numbers themselves do not indicate any execution sequence. In addition, the processes may include more or fewer operations, and the operations may be performed in sequence or in parallel. It should be noted that the descriptions of "first", "second", and the like in this specification are used to distinguish different messages, devices, modules, and the like, do not indicate a sequence, and do not limit that the "first" and the "second" represent different types.

An embodiment of the present disclosure further provides a computing resource processing apparatus. As shown in FIG. 7, the apparatus includes: a maintenance module 701, configured to maintain sleep state transition prediction information respectively corresponding to a plurality of physical computing resource objects, where the sleep state transition prediction information includes probability information of entering each of a plurality of sleep states during the subsequent sleep when a corresponding physical computing resource object is woken up from any of the plurality of sleep states; a selection module 702, configured to select a target physical computing resource object based on the sleep state transition prediction information respectively corresponding to the plurality of physical computing resource objects; and a scheduling module 703, configured to schedule a to-be-scheduled target task to the target physical computing resource object.

In some optional embodiments, when maintaining the sleep state transition prediction information respectively corresponding to the plurality of physical computing resource objects, the maintenance module 701 is specifically configured to: obtain actual sleep time of any physical computing resource object in a first sleep state when monitoring that the any physical computing resource object is woken up from the first sleep state, where the first sleep state is any sleep state; and update sleep state transition prediction information corresponding to the any physical computing resource object based on the actual sleep time and exit latency time of the first sleep state.

In some optional embodiments, when obtaining the actual sleep time of the any physical computing resource object in the first sleep state when monitoring that the any physical computing resource object is woken up from the first sleep state, the maintenance module 701 is specifically configured to: obtain first time at which the any physical computing resource object enters the first sleep state and second time at which the any physical computing resource object is woken up from the first sleep state by a wake-up event; and calculate the actual sleep time of the any physical computing resource object in the first sleep state based on the second time and the first time.

In some optional embodiments, when updating the sleep state transition prediction information corresponding to the any physical computing resource object based on the actual sleep time and the exit latency time of the first sleep state, the maintenance module 701 is specifically configured to: in a case that the actual sleep time matches the exit latency time of the first sleep state, relatively increase probability information of re-entering the first sleep state during the subsequent sleep when the any physical computing resource object is woken up from the first sleep state; or in a case that the actual sleep time does not match the exit latency time of the first sleep state, relatively increase probability information of entering a second sleep state during the subsequent sleep when the any physical computing resource object is woken up from the first sleep state, where the second sleep state is a sleep state whose exit latency time matches the actual sleep time.

In some optional embodiments, when relatively increasing the probability information of re-entering the first sleep state during the subsequent sleep when the any physical computing resource object is woken up from the first sleep state, the maintenance module 701 is specifically configured to: increase the probability information of re-entering the first sleep state during the subsequent sleep when the any physical computing resource object is woken up from the first sleep state; and/or decrease probability information of entering the other sleep state during the subsequent sleep when the any physical computing resource object is woken up from the first sleep state, where the other sleep state is a sleep state other than the first sleep state.

In some optional embodiments, when relatively increasing the probability information of entering the second sleep state during the subsequent sleep when the any physical computing resource object is woken up from the first sleep state, the maintenance module 701 is specifically configured to: increase the probability information of entering the second sleep state during the subsequent sleep when the any physical computing resource object is woken up from the first sleep state; and/or decrease the probability information of entering the first sleep state during the subsequent sleep when the any physical computing resource object is woken up from the first sleep state; and/or decrease probability information of entering the other sleep state during the subsequent sleep when the physical computing resource object is woken up from the first sleep state, where the other sleep state is a sleep state other than the first sleep state and the second sleep state.

In some optional embodiments, the maintenance module 701 is further configured to: create data structure bodies respectively corresponding to the plurality of physical computing resource objects in an initialization process, where a data structure is used for storing sleep state transition prediction information corresponding to a corresponding physical computing resource objects; and initialize the data structure bodies respectively corresponding to the plurality of physical computing resource object, to obtain initial values of the sleep state transition prediction information respectively corresponding to the plurality of physical computing resource objects.

In some optional embodiments, when creating the data structure bodies respectively corresponding to the plurality of physical computing resource objects, the maintenance module 701 is specifically configured to: create sleep state weight arrays respectively corresponding to the plurality of physical computing resource objects, where the sleep state weight array is a multidimensional array including a plurality of rows and a plurality of columns, where a row represents a sleep state that a corresponding physical computing resource object may be in when being woken up, and a column represents a sleep state that the corresponding physical computing resource object may enter during the subsequent sleep, and an array element at an intersection of the row and the column represents a weight for the corresponding physical computing resource object to enter the sleep state represented by the column during the subsequent sleep when being woken up from the sleep state represented by the row, where a larger weight indicates a higher probability.

In some optional embodiments, when initializing the data structure bodies respectively corresponding to the plurality of physical computing resource objects, the maintenance module 701 is specifically configured to: initialize an array element where a row number equals a column number to a first value, and initialize an array element where a row number is different from a column number to a second value, where the first value is greater than the second value, and a sum of a first value and a second value in the same row is a third value.

In some optional embodiments, the selection module 702 is further configured to: determine a third sleep state based on sleep state transition prediction information corresponding to any physical computing resource object when monitoring that the any physical computing resource object needs to sleep; and control the any physical computing resource object to enter the third sleep state.

In some optional embodiments, when determining the third sleep state based on the sleep state transition prediction information corresponding to the any physical computing resource object, the selection module 702 is specifically configured to: obtain, as a fourth sleep state, a sleep state recently exited by the any physical computing resource object; obtain, from the sleep state transition prediction information corresponding to the any physical computing resource object, probability information of entering each sleep state during the subsequent sleep when the any physical computing resource object is woken up from the fourth sleep state; and based on the probability information of entering each sleep state during the subsequent sleep when being woken up from the fourth sleep state, select, as a candidate sleep state, a sleep state that has maximum probability information and in a case that exit latency time of the candidate sleep state is less than maximum tolerable exit latency time of a system, and use the candidate sleep state as the third sleep state.

In some optional embodiments, when the exit latency time of the candidate sleep state is greater than or equal to the maximum tolerable exit latency time of the system, the selection module 702 is further configured to: select the other sleep state whose exit latency time is less than the maximum tolerable exit latency time of the system as the third sleep state.

In some optional embodiments, when selecting the other sleep state whose exit latency time is less than the maximum tolerable exit latency time of the system as the third sleep state, the selection module 702 is specifically configured to: when there are a plurality of sleep states whose exit latency time is less than the maximum tolerable exit latency time of the system, select a sleep state whose exit latency time is less than the maximum tolerable exit latency time of the system and whose probability information is maximum as the third sleep state.

In some optional embodiments, when selecting the target physical computing resource object based on the sleep state transition prediction information respectively corresponding to the plurality of physical computing resource objects, the selection module 702 is specifically configured to: in response to a resource scheduling trigger event, generate, based on the sleep state transition prediction information respectively corresponding to the plurality of physical computing resource objects, sleep habit information respectively corresponding to the plurality of physical computing resource objects; and select, from the plurality of physical computing resource objects, the target physical computing resource object based on the sleep habit information respectively corresponding to the plurality of physical computing resource objects.

In some optional embodiments, when generating, based on the sleep state transition prediction information respectively corresponding to the plurality of physical computing resource objects, the sleep habit information respectively corresponding to the plurality of physical computing resource objects, the selection module 702 is specifically configured to: for any physical computing resource object, obtain, from sleep state transition prediction information corresponding to the any physical computing resource object, probability information of re-entering any sleep state during the subsequent sleep when the any physical computing resource object exits from the sleep state; and generate sleep habit information corresponding to the any physical computing resource object based on the probability information of re-entering the any sleep state during the subsequent sleep when the any physical computing resource object exits from the sleep state.

In some optional embodiments, when generating the sleep habit information corresponding to the any physical computing resource object based on the probability information of re-entering the any sleep state during the subsequent sleep when the any physical computing resource object exits from the sleep state, the selection module 702 is specifically configured to: if probability information of entering a shallowest sleep state during the subsequent sleep when the any physical computing resource object exits from the shallowest sleep state is maximum, determine that a sleep habit type corresponding to the any physical computing resource is a shallow sleep habit, and generate a sleep probability of the any physical computing resource object in the shallow sleep habit based on the maximum probability information; or if probability information of entering a deepest sleep state during the subsequent sleep when the any physical computing resource object exits from the deepest sleep state is maximum, determine that a sleep habit type corresponding to the any physical computing resource object is a deep sleep habit, and generate a sleep probability of the any physical computing resource in the deep sleep habit based on the maximum probability information.

In some optional embodiments, when selecting the target physical computing resource object from the plurality of physical computing resource objects based on the sleep habit information respectively corresponding to the plurality of physical computing resource objects, the selection module 702 is specifically configured to: determine, based on the sleep habit information respectively corresponding to the plurality of physical computing resource objects, at least one candidate physical computing resource object corresponding to the shallow sleep habit; and based on a sleep probability of the at least one candidate physical computing resource object in the shallow sleep habit, select, as the target physical computing resource object, a candidate physical computing resource object whose sleep probability satisfies a requirement.

In some optional embodiments, when selecting, as the target physical computing resource object, the candidate physical computing resource object whose sleep probability satisfies the requirement based on the sleep probability of the at least one candidate physical computing resource object in the shallow sleep habit, the selection module 702 is specifically configured to: select the target physical computing resource object from the at least one candidate physical computing resource object based on the sleep probability of the at least one candidate physical computing resource object in the shallow sleep habit and with reference to other auxiliary information, where the other auxiliary information includes at least one of a type of a resource scheduling trigger event, a current running state of the candidate physical computing resource object, or a current utilization rate of the candidate physical computing resource object.

In some optional embodiments, when selecting the target physical computing resource object from the at least one candidate physical computing resource object based on the sleep probability of the at least one candidate physical computing resource object in the shallow sleep habit and with reference to the other auxiliary information, the selection module 702 is specifically configured to: select, as the target physical computing resource object, a candidate physical computing resource object whose utilization rate satisfies the requirement and whose sleep probability is maximum based on the sleep probability of the at least one candidate physical computing resource object in the shallow sleep habit and the current utilization rate.

In this embodiment, resource scheduling for a physical computing resource object is combined with sleep control for the physical computing resource object. By way of maintaining sleep state transition prediction information respectively corresponding to a plurality of physical computing resource objects, and performing scheduling on the physical computing resource object based on the maintained sleep state transition prediction information, a task can be scheduled to a physical computing resource object that is shallow or busy in a sleep state as much as possible. This helps to enable a part of physical computing resource objects to be in a deep sleep state as long as possible and enable a part of the physical computing resource objects to be in a busy state as much as possible, to reduce a frequency of entering or exiting from a sleep state by the physical computing resource object.

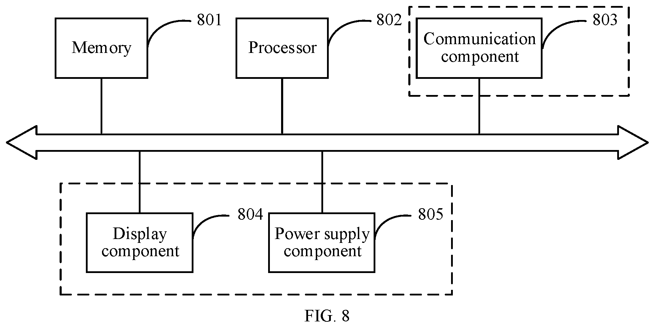

FIG. 8 is a schematic structural diagram of an electronic device according to an example embodiment of the present disclosure. As shown in FIG. 8, the device includes: a memory 801 and a processor 802. The electronic device includes but is not limited to the physical machine in the foregoing embodiment, which is not limited in this embodiment.

The memory 801 is configured to store a computer program, and may be configured to store various other data to support an operation on the electronic device. Examples of the data include instructions and the like of any application or method operated on the electronic device.

In some embodiments, the processor 802 is coupled to the memory 801, and is configured to execute the computer program in the memory 801, so as to: maintain sleep state transition prediction information respectively corresponding to a plurality of physical computing resource objects, where the sleep state transition prediction information includes probability information of entering each of a plurality of sleep states during the subsequent sleep when a corresponding physical computing resource object is woken up from any of the plurality of sleep states; select a target physical computing resource object based on the sleep state transition prediction information respectively corresponding to the plurality of physical computing resource objects; and schedule a to-be-scheduled target task to the target physical computing resource object.

In some optional embodiments, when maintaining the sleep state transition prediction information respectively corresponding to the plurality of physical computing resource objects, the processor 802 is specifically configured to: obtain actual sleep time of any physical computing resource object in a first sleep state when monitoring that the any physical computing resource object is woken up from the first sleep state, where the first sleep state is any sleep state; and update sleep state transition prediction information corresponding to the any physical computing resource object based on the actual sleep time and exit latency time of the first sleep state.

In some optional embodiments, when obtaining the actual sleep time of the any physical computing resource object in the first sleep state when monitoring that the any physical computing resource object is woken up from the first sleep state, the processor 802 is specifically configured to: obtain first time at which the any physical computing resource object enters the first sleep state and second time at which the any physical computing resource object is woken up from the first sleep state by a wake-up event; and calculate the actual sleep time of the any physical computing resource object in the first sleep state based on the second time and the first time.

In some optional embodiments, when updating the sleep state transition prediction information corresponding to the any physical computing resource object based on the actual sleep time and the exit latency time of the first sleep state, the processor 802 is specifically configured to: in a case that the actual sleep time matches the exit latency time of the first sleep state, relatively increase probability information of re-entering the first sleep state during the subsequent sleep when the any physical computing resource object is woken up from the first sleep state; or in a case that the actual sleep time does not match the exit latency time of the first sleep state, relatively increase probability information of entering a second sleep state during the subsequent sleep when the any physical computing resource object is woken up from the first sleep state, where the second sleep state is a sleep state whose exit latency time matches the actual sleep time.

In some optional embodiments, when relatively increasing the probability information of re-entering the first sleep state during the subsequent sleep when the any physical computing resource object is woken up from the first sleep state, the processor 802 is specifically configured to: increase the probability information of re-entering the first sleep state during the subsequent sleep when the any physical computing resource object is woken up from the first sleep state; and/or decrease probability information of entering the other sleep state during the subsequent sleep when the any physical computing resource object is woken up from the first sleep state, where the other sleep state is a sleep state other than the first sleep state.

In some optional embodiments, when relatively increasing the probability information of entering the second sleep state during the subsequent sleep when the any physical computing resource object is woken up from the first sleep state, the processor 802 is specifically configured to: increase the probability information of entering the second sleep state during the subsequent sleep when the any physical computing resource object is woken up from the first sleep state; and/or decrease the probability information of entering the first sleep state during the subsequent sleep when the any physical computing resource object is woken up from the first sleep state; and/or decrease probability information of entering the other sleep state during the subsequent sleep when the physical computing resource object is woken up from the first sleep state, where the other sleep state is a sleep state other than the first sleep state and the second sleep state.

In some optional embodiments, the processor 802 is further configured to: create data structure bodies respectively corresponding to the plurality of physical computing resource objects in an initialization process, where a data structure is used for storing sleep state transition prediction information corresponding to a corresponding physical computing resource objects; and initialize the data structure bodies respectively corresponding to the plurality of physical computing resource object, to obtain initial values of the sleep state transition prediction information respectively corresponding to the plurality of physical computing resource object data structure.

In some optional embodiments, when creating the data structure bodies respectively corresponding to the plurality of physical computing resource objects, the processor 802 is specifically configured to: create sleep state weight arrays respectively corresponding to the plurality of physical computing resource objects, where the sleep state weight array is a multidimensional array including a plurality of rows and a plurality of columns, where a row represents a sleep state that a corresponding physical computing resource object may be in when being woken up, and a column represents a sleep state that the corresponding physical computing resource object may enter during the subsequent sleep, and an array element at an intersection of the row and the column represents a weight for the corresponding physical computing resource object to enter the sleep state represented by the column during the subsequent sleep when being woken up from the sleep state represented by the row, where a larger weight indicates a higher probability.

In some optional embodiments, when initializing the data structure bodies respectively corresponding to the plurality of physical computing resource objects, the processor 802 is specifically configured to: initialize an array element where a row number equals a column number to a first value, and initialize an array element where a row number is different from a column number to a second value, where the first value is greater than the second value, and a sum of a first value and a second value in the same row is a third value.

In some optional embodiments, the processor 802 is further configured to: determine a third sleep state based on sleep state transition prediction information corresponding to any physical computing resource object when monitoring that the any physical computing resource object needs to sleep; and control the any physical computing resource object to enter the third sleep state.

In some optional embodiments, when determining the third sleep state based on the sleep state transition prediction information corresponding to the any physical computing resource object, the processor 802 is specifically configured to: obtain, as a fourth sleep state, a sleep state recently exited by the any physical computing resource object; obtain, from the sleep state transition prediction information corresponding to the any physical computing resource object, probability information of entering each sleep state during the subsequent sleep when the any physical computing resource object is woken up from the fourth sleep state; and based on the probability information of entering each sleep state during the subsequent sleep when being woken up from the fourth sleep state, select, as a candidate sleep state, a sleep state that has maximum probability information and in a case that exit latency time of the candidate sleep state is less than maximum tolerable exit latency time of a system, and use the candidate sleep state as the third sleep state.

In some optional embodiments, when the exit latency time of the candidate sleep state is greater than or equal to the maximum tolerable exit latency time of the system, the processor 802 is further configured to: select the other sleep state whose exit latency time is less than the maximum tolerable exit latency time of the system as the third sleep state.

In some optional embodiments, when selecting the other sleep state whose exit latency time is less than the maximum tolerable exit latency time of the system as the third sleep state, the processor 802 is specifically configured to: when there are a plurality of sleep states whose exit latency time is less than the maximum tolerable exit latency time of the system, select a sleep state whose exit latency time is less than the maximum tolerable exit latency time of the system and whose probability information is maximum as the third sleep state.

In some optional embodiments, when selecting the target physical computing resource object based on the sleep state transition prediction information respectively corresponding to the plurality of physical computing resource objects, the processor 802 is specifically configured to: in response to a resource scheduling trigger event, generate, based on the sleep state transition prediction information respectively corresponding to the plurality of physical computing resource objects, sleep habit information respectively corresponding to the plurality of physical computing resource objects; and select, from the plurality of physical computing resource objects, the target physical computing resource object based on the sleep habit information respectively corresponding to the plurality of physical computing resource objects.

In some optional embodiments, when generating, based on the sleep state transition prediction information respectively corresponding to the plurality of physical computing resource objects, the sleep habit information respectively corresponding to the plurality of physical computing resource objects, the processor 802 is specifically configured to: for any physical computing resource object, obtain, from sleep state transition prediction information corresponding to the any physical computing resource object, probability information of re-entering any sleep state during the subsequent sleep when the any physical computing resource object exits from the sleep state; and generate sleep habit information corresponding to the any physical computing resource object based on the probability information of re-entering the any sleep state during the subsequent sleep when the any physical computing resource object exits from the sleep state.

In some optional embodiments, when generating the sleep habit information corresponding to the any physical computing resource object based on the probability information of re-entering the any sleep state during the subsequent sleep when the any physical computing resource object exits from the sleep state, the processor 802 is specifically configured to: if probability information of entering a shallowest sleep state during the subsequent sleep when the any physical computing resource object exits from the shallowest sleep state is maximum, determine that a sleep habit type corresponding to the any physical computing resource is a shallow sleep habit, and generate a sleep probability of the any physical computing resource object in the shallow sleep habit based on the maximum probability information; or if probability information of entering a deepest sleep state during the subsequent sleep when the any physical computing resource object exits from the deepest sleep state is maximum, determine that a sleep habit type corresponding to the any physical computing resource object is a deep sleep habit, and generate a sleep probability of the any physical computing resource in the deep sleep habit based on the maximum probability information.

In some optional embodiments, when selecting the target physical computing resource object from the plurality of physical computing resource objects based on the sleep habit information respectively corresponding to the plurality of physical computing resource objects, the processor 802 is specifically configured to: determine, based on the sleep habit information respectively corresponding to the plurality of physical computing resource objects, at least one candidate physical computing resource object corresponding to the shallow sleep habit; and based on a sleep probability of the at least one candidate physical computing resource object in the shallow sleep habit, select, as the target physical computing resource object, a candidate physical computing resource object whose sleep probability satisfies a requirement.

In some optional embodiments, when selecting, as the target physical computing resource object, the candidate physical computing resource object whose sleep probability satisfies the requirement based on the sleep probability of the at least one candidate physical computing resource object in the shallow sleep habit, the processor 802 is specifically configured to: select the target physical computing resource object from the at least one candidate physical computing resource object based on the sleep probability of the at least one candidate physical computing resource object in the shallow sleep habit and with reference to other auxiliary information, where the other auxiliary information includes at least one of a type of a resource scheduling trigger event, a current running state of the candidate physical computing resource object, or a current utilization rate of the candidate physical computing resource object.

In some optional embodiments, when selecting the target physical computing resource object from the at least one candidate physical computing resource object based on the sleep probability of the at least one candidate physical computing resource object in the shallow sleep habit and with reference to the other auxiliary information, the processor 802 is specifically configured to: select, as the target physical computing resource object, a candidate physical computing resource object whose utilization rate satisfies the requirement and whose sleep probability is maximum based on the sleep probability of the at least one candidate physical computing resource object in the shallow sleep habit and the current utilization rate.

Further, as shown in FIG. 8, the electronic device further includes other components such as a communication component 803, a display 804, and a power supply component 805. Only some components are schematically provided in FIG. 8, which does not mean that the electronic device includes only the components shown in FIG. 8. In addition, components in dashed-line boxes in FIG. 8 are optional components rather than mandatory components, and may be specifically determined based on a product form of the electronic device. The electronic device in this embodiment may be implemented as a terminal device such as a desktop computer, a notebook computer, a tablet computer, a smartphone, or an IOT device, or may be a server device such as a conventional server, a cloud server, or a server array. If the electronic device in this embodiment is implemented as a terminal device such as a desktop computer, a notebook computer, a tablet computer, or a smartphone, the electronic device may include the components in the dashed-line boxes in FIG. 8. If the electronic device in this embodiment is implemented as a server device such as a conventional server, a cloud server, or a server array, the electronic device may not include the components in the dashed-line boxes in FIG. 8.

Correspondingly, an embodiment of the present disclosure further provides a computer-readable storage medium storing a computer program which, when executed, enables steps that can be performed by the electronic device in the method embodiment shown in FIG. 5 to be implemented.

Correspondingly, an embodiment of the present disclosure further provides a multi-core processor system, including a plurality of processor cores and a memory. The memory is configured to store a program code of an operating system, and the plurality of processor cores are configured to run the program code of the operating system, to implement steps in the method embodiment shown in FIG. 5.

In this embodiment, resource scheduling for a physical computing resource object is combined with sleep control for the physical computing resource object. By way of maintaining sleep state transition prediction information respectively corresponding to a plurality of physical computing resource objects, and performing scheduling on the physical computing resource object based on the maintained sleep state transition prediction information, a task can be scheduled to a physical computing resource object that is shallow or busy in a sleep state as much as possible. This helps to enable a part of physical computing resource objects to be in a deep sleep state as long as possible and enable a part of the physical computing resource objects to be in a busy state as much as possible, to reduce a frequency of entering or exiting from a sleep state by the physical computing resource object.

The foregoing memory may be implemented by any type of volatile or non-volatile storage device or a combination thereof, such as a static random access memory (Static Random Access Memory, SRAM), an electrically erasable programmable read-only memory (Electrically Erasable Programmable Read-Only Memory, EEPROM), an erasable programmable read-only memory (Erasable Programmable Read-Only Memory, EPROM), a programmable read-only memory (Programmable Read-Only Memory, PROM), a read-only memory (Read-Only Memory, ROM), a magnetic memory, a flash memory, a magnetic disk, or an optical disc.

The communication component is configured to facilitate communication in a wired or wireless manner between the other device and a device in which the communication component is located. The device in which the communication component is located may access a wireless network based on a communication standard, such as a mobile communication network such as Wi-Fi, 2G, 3G, 4G/LTE, or 5G, or a combination thereof. In an example embodiment, the communication component receives a broadcast signal or broadcast-related information from an external broadcast management system through a broadcast channel. In an example embodiment, the communication component further includes a near field communication (Near Field Communication, NFC) module, to facilitate short-range communication. For example, the NFC module may be implemented based on a radio frequency identification (Radio Frequency Identification, RFID) technology, an infrared data association (Infrared Data Association, IrDA) technology, an ultra wide band (Ultra Wide Band, UWB) technology, a bluetooth (BlueTooth, BT) technology, and another technology.

The display includes a screen, and the screen may include a liquid crystal display (Liquid Crystal Display, LCD) and a touch panel (Touch Panel, TP). If the screen includes the touch panel, the screen may be implemented as a touchscreen, to receive an input signal from a user. The touch panel includes one or more touch sensors to sense touching, sliding, and a gesture on the touch panel. The touch sensor may not only sense a boundary of a touch or slide operation, but also detect duration and pressure related to the touch or slide operation.

The power supply component provides power to various components of a device in which the power supply component is located. The power supply component may include a power supply management system, one or more power supplies, and other components associated with generating, managing, and allocating power for the device in which the power supply component is located.

The audio component may be configured to output and/or input an audio signal. For example, the audio component includes a microphone (Microphone, MIC). When a device in which the audio component is located is in an operation mode, such as a call mode, a recording mode, and a voice identification mode, the microphone is configured to receive an external audio signal. The received audio signal may be further stored in the memory or sent by using the communication component. In some embodiments, the audio component further includes a speaker, configured to output an audio signal.

A person skilled in the art should understand that embodiments of the present disclosure may be provided as a method, a system, or a computer program product. Therefore, the present disclosure may use a form of hardware-only embodiments, software-only embodiments, or embodiments combining software and hardware. In addition, the present disclosure may use a form of a computer program product implemented on one or more computer-readable storage media (including but not limited to a disk memory, a compact disc read-only memory (Compact Disc Read-Only Memory, CD-ROM), an optical memory, and the like) including computer-usable program code.

The present disclosure is described with reference to flowcharts and/or block diagrams of the method, device (system), and computer program product in embodiments of the present disclosure. It should be understood that computer program instructions can implement each procedure and/or block in the flowcharts and/or block diagrams and a combination of processes and/or blocks in the flowcharts and/or block diagrams. These computer program instructions may be provided for a general-purpose computer, a special-purpose computer, an embedded processor, or processors of other programmable data processing devices to generate a machine, so that an apparatus configured to implement functions specified in one or more processes in the flowcharts and/or one or more blocks in the block diagrams is generated by using instructions executed by the computer or the processors of other programmable data processing devices.

These computer program instructions may alternatively be stored in a computer-readable memory that can instruct a computer or other programmable data processing devices to work in a specific manner, so that the instructions stored in the computer-readable memory generate an article of manufacture that includes an instruction apparatus. The instruction apparatus implements a specific function in one or more processes in the flowcharts and/or in one or more blocks in the block diagrams.

These computer program instructions may further be loaded onto a computer or other programmable data processing devices, so that a series of operations and steps are performed on the computer or the other programmable devices, thereby generating computer-implemented processing. Therefore, the instructions executed on the computer or the other programmable device provide steps for implementing a specific function in one or more processes in the flowcharts and/or in one or more blocks in the block diagrams.

In a typical configuration, a computing device includes one or more processors (Central Processing Unit, CPU), an input/output interface, a network interface, and a memory.

The memory may include a form such as a volatile memory, a random access memory (Random Access Memory, RAM) and/or a non-volatile memory such as a read-only memory (ROM) or a flash RAM (flash RAM) in a computer-readable medium. The memory is an example of the computer-readable medium.

The computer-readable medium includes a non-volatile medium and a volatile medium, a removable medium and a non-removable medium, which may implement storage of information by using any method or technology. The information may be a computer-readable instruction, a data structure, a program module, or other data. Examples of the storage medium of the computer include, but are not limited to, a phase-change memory (Phase-change Random Access Memory, PRAM), a static random access memory (SRAM), a dynamic random access memory (Dynamic Random Access Memory, DRAM), or other types of random access memory (RAM), a read-only memory (ROM), an erasable programmable read-only memory (EEPROM), a flash memory or other memory technologies, a compact disc read-only memory (CD-ROM), a digital video disc (digital video disc, DVD) or other optical storages, a cartridge tape, a magnetic tape, a magnetic disk storage or other magnetic storage devices, or any other non-transmission medium, which may be configured to store information accessible by a computing device. As defined herein, the computer-readable medium does not include transitory computer-readable media (transitory media), such as a modulated data signal and a modulated carrier.

It should be further noted that the terms "include", "comprise", or any variants thereof are intended to cover a non-exclusive inclusion. Therefore, a process, method, article, or device that includes a series of elements not only includes such elements, but also includes other elements not specified expressly, or may include inherent elements of the process, method, article, or device. An element defined by "includes a ..." does not, without more constraints, preclude the existence of additional identical elements in the process, method, article, or device that includes the element.

The foregoing descriptions are merely embodiments of the present disclosure, and are not intended to limit the present disclosure. For a person skilled in the art, various modifications and variations can be made to the present disclosure. Any modification, equivalent replacement, and improvement made without departing from the spirit and principle of the present disclosure shall fall within the protection scope of the claims of the present disclosure.

## Claims

1. A computing resource processing method, comprising:
maintaining sleep state transition prediction information respectively corresponding to a plurality of physical computing resource objects, wherein the sleep state transition prediction information comprises probability information of entering each of a plurality of sleep states during the subsequent sleep when a corresponding physical computing resource object is woken up from any of the plurality of sleep states;
selecting a target physical computing resource object based on the sleep state transition prediction information respectively corresponding to the plurality of physical computing resource objects;
scheduling a to-be-scheduled target task to the target physical computing resource object.

2. The method according to claim 1, wherein the maintaining the sleep state transition prediction information respectively corresponding to the plurality of physical computing resource objects comprises:
obtaining actual sleep time of any physical computing resource object in a first sleep state when monitoring that the any physical computing resource object is woken up from the first sleep state, wherein the first sleep state is any sleep state;
updating sleep state transition prediction information corresponding to the any physical computing resource object based on the actual sleep time and exit latency time of the first sleep state.

3. The method according to claim 2, wherein the updating the sleep state transition prediction information corresponding to the any physical computing resource object based on the actual sleep time and the exit latency time of the first sleep state comprises:
in a case that the actual sleep time matches the exit latency time of the first sleep state, relatively increasing probability information of re-entering the first sleep state during the subsequent sleep when the any physical computing resource object is woken up from the first sleep state;
in a case that the actual sleep time does not match the exit latency time of the first sleep state, relatively increasing probability information of entering a second sleep state during the subsequent sleep when the any physical computing resource object is woken up from the first sleep state, wherein the second sleep state is a sleep state whose exit latency time matches the actual sleep time.

4. The method according to any one of claims 1 to 3, further comprising:
creating data structure bodies respectively corresponding to the plurality of physical computing resource objects in an initialization process, wherein a data structure is used for storing sleep state transition prediction information corresponding to a corresponding physical computing resource object;
initializing the data structure bodies respectively corresponding to the plurality of physical computing resource objects, to obtain initial values of the sleep state transition prediction information respectively corresponding to the plurality of physical computing resource objects.

5. The method according to claim 4, wherein the creating the data structure bodies respectively corresponding to the plurality of physical computing resource objects comprises:
creating sleep state weight arrays respectively corresponding to the plurality of physical computing resource objects, wherein the sleep state weight array is a multidimensional array comprising a plurality of rows and a plurality of columns;
wherein a row represents a sleep state that a corresponding physical computing resource object may be in when being woken up, and a column represents a sleep state that the corresponding physical computing resource object may enter during the subsequent sleep;
an array element at an intersection of the row and the column represents a weight for the corresponding physical computing resource object to enter the sleep state represented by the column during the subsequent sleep when being woken up from the sleep state represented by the row, wherein a larger weight indicates a higher probability.

6. The method according to claim 5, wherein the initializing the data structure bodies respectively corresponding to the plurality of physical computing resource objects comprises:
initializing an array element where a row number equals a column number to a first value, and initializing an array element where a row number is different from a column number to a second value,
wherein the first value is greater than the second value, and a sum of a first value and a second value in the same row is a third value.

7. The method according to any one of claims 1 to 6, further comprising:
determining a third sleep state based on sleep state transition prediction information corresponding to any physical computing resource object when monitoring that the any physical computing resource object needs to sleep; and
controlling the any physical computing resource object to enter the third sleep state.

8. The method according to claim 7, wherein the determining the third sleep state based on the sleep state transition prediction information corresponding to the any physical computing resource object comprises:
obtaining, as a fourth sleep state, a sleep state recently exited by the any physical computing resource object;
obtaining, from the sleep state transition prediction information corresponding to the any physical computing resource object, probability information of entering each sleep state during the subsequent sleep when being woken up from the fourth sleep state;
based on the probability information of entering each sleep state during the subsequent sleep when being woken up from the fourth sleep state, selecting, as a candidate sleep state, a sleep state that has maximum probability information;
in a case that exit latency time of the candidate sleep state is less than maximum tolerable exit latency time of a system, using the candidate sleep state as the third sleep state.

9. The method according to any one of claims 1 to 8, wherein the selecting the target physical computing resource object based on the sleep state transition prediction information respectively corresponding to the plurality of physical computing resource objects comprises:
in response to a resource scheduling trigger event, generating, based on the sleep state transition prediction information respectively corresponding to the plurality of physical computing resource objects, sleep habit information respectively corresponding to the plurality of physical computing resource objects;
selecting, from the plurality of physical computing resource objects, the target physical computing resource object based on the sleep habit information respectively corresponding to the plurality of physical computing resource objects.

10. The method according to claim 9, wherein the generating, based on the sleep state transition prediction information respectively corresponding to the plurality of physical computing resource objects, the sleep habit information respectively corresponding to the plurality of physical computing resource objects comprises:
for any physical computing resource object, obtaining, from sleep state transition prediction information corresponding to the any physical computing resource object, probability information of re-entering any sleep state during the subsequent sleep when the any physical computing resource object exits from the sleep state;
generating sleep habit information corresponding to the any physical computing resource object based on the probability information of re-entering the any sleep state during the subsequent sleep when the any physical computing resource object exits from the sleep state.

11. A physical machine, wherein an operating system running on a hardware resource of the physical machine, the hardware resource comprises a plurality of physical computing resource objects, the plurality of physical computing resource objects supports a plurality of sleep states having different sleep depths, and the operating system comprises a target resource scheduler and a target sleep controller;
wherein the target sleep controller is configured to maintain sleep state transition prediction information respectively corresponding to the plurality of physical computing resource objects, wherein the sleep state transition prediction information comprises probability information of entering each sleep state during the subsequent sleep when a corresponding physical computing resource object is woken up from any sleep state;
the target resource scheduler is configured to: select a target physical computing resource object based on the sleep state transition prediction information respectively corresponding to the plurality of physical computing resource objects, and schedule a to-be-scheduled target task to the target physical computing resource object.

12. The physical machine according to claim 11, wherein the operating system further comprises a further resource scheduler and a further sleep controller, sleep control logic of different sleep controllers is different, and resource scheduling logic of different resource schedulers is different.

13. The physical machine according to claim 12, wherein when any resource scheduler of the further resource scheduler and any sleep controller of the further sleep controller are configured to be disabled, the target resource scheduler and the target sleep controller are configured to take effect;
wherein the any resource scheduler of the further resource scheduler and the any sleep controller of the further sleep controller are independent of each other; and the target resource scheduler is associated with the target sleep controller.

14. A multi-core processor system, comprising a plurality of processor cores and a memory, wherein the memory is configured to store a program code of an operating system, and the plurality of processor cores are configured to run the program code of the operating system, to implement steps in the method according to any one of claims 1 to 10.

15. A computer-readable storage medium storing a computer program, wherein the computer program, when executed by a processor, enables the processor to implement steps in the method according to any one of claims 1 to 10.

16. A computer program product, wherein the computer program product comprises a computer program, and the computer program, when executed by a processor, implements steps in the method according to any one of claims 1 to 10.
